(19) Europäisches Patentamt
European Patent Office
Office européen des brevets

(11) Numéro de publication : 0 287 479 B1

(12) # FASCICULE DE BREVET EUROPEEN

(45) Date de publication du fascicule du brevet : **11.09.91 Bulletin 91/37**

(51) Int. Cl.[5] : **C08G 73/12**, C08F 8/08, C08G 77/42

(21) Numéro de dépôt : **88420081.7**

(22) Date de dépôt : **03.03.88**

(54) **Polymères thermostables à base de maléimides et de diamines siloxanes, et leur procédé de fabrication.**

(30) Priorité : **10.03.87 FR 8703513**

(43) Date de publication de la demande : **19.10.88 Bulletin 88/42**

(45) Mention de la délivrance du brevet : **11.09.91 Bulletin 91/37**

(84) Etats contractants désignés : **AT BE CH DE ES FR GB IT LI LU NL SE**

(56) Documents cités : **Néant**

(73) Titulaire : **RHONE-POULENC CHIMIE
25, quai Paul Doumer
F-92408 Courbevoie Cédex (FR)**

(72) Inventeur : **Barthelemy, Pascal
21, rue de la Part-Dieu
F-69003 Lyon (FR)**
Inventeur : **Camberlin, Yves
68 bis Quai Clémenceau
F-69300 Caluire (FR)**

(74) Mandataire : **Trolliet, Maurice et al
RHONE-POULENC INTERSERVICES Service Brevets Chimie Centre de Recherches des Carrières B.P. 62
F-69192 Saint-Fons Cédex (FR)**

**EP 0 287 479 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet de nouveaux polymères thermostables dont l'obtention met en jeu, à côté d'éventuels autres réactifs, des bis-maléimides dont éventuellement un bis-maléimide renfermant dans sa structure un groupement diorganopolysiloxane et des diamines possédant un groupement diorganopolysiloxane. Elle concerne également des procédés de préparation de ces polymères.

On sait (cf. brevet français FR-A-1.555.564) que l'on peut obtenir des polymères thermostables en faisant réagir un N,N'-bis-imide d'acide dicarboxylique non saturé tel que par exemple un N,N'-bis-maléimide avec certaines diamines biprimaires aromatiques. Ces polymères, qui présentent une remarquable stabilité thermique, peuvent être utilisés pour la fabrication de pièces moulées ou de stratifiés, en vue des applications les plus diverses.

Il a maintenant été trouvé que l'on peut obtenir des polymères présentant, entre autres propriétés, une résistance au choc élevée, en faisant réagir un ou plusieurs N,N'-bis-maléimides du type de ceux décrits dans le brevet précité avec une diamine biprimaire aromatique renfermant dans sa structure un groupement diorganopolysiloxane, en présence éventuellement d'un N,N'-bis-maléimide renfermant également dans sa structure un groupement diorganopolysiloxane et/ou d'un autre réactif copolymérisable et/ou d'un catalyseur.

Plus précisément, la présente invention concerne des polymères à groupements imides caractérisés en ce qu'ils comprennent le produit de réaction, à une température allant de 50° à 300°C, entre :

— (a) un N,N'-bis-maléimide ou une association de plusieurs bis-maléimides de formule :

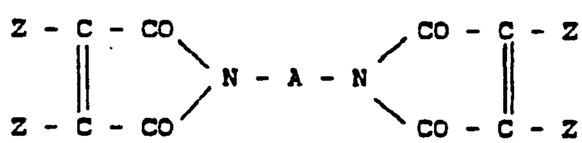

(I)

dans laquelle :

- les symboles Z, identiques ou différents, représentent chacun H, $CH_3$ ou Cl ;
- le symbole A représente un radical divalent choisi dans le groupe constitué par les radicaux : cyclohexylènes ; phénylènes ; méthyl-4 phénylènes-1,3 ; méthyl-2 phénylène-1,3 ; méthyl-5 phénylène-1,3; diéthyl-2,5 méthyl-3 phénylène-1,4 ; et les radicaux de formule :

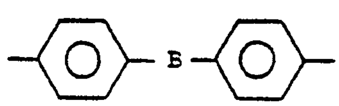

dans laquelle B représente un lien valentiel simple ou un groupement :

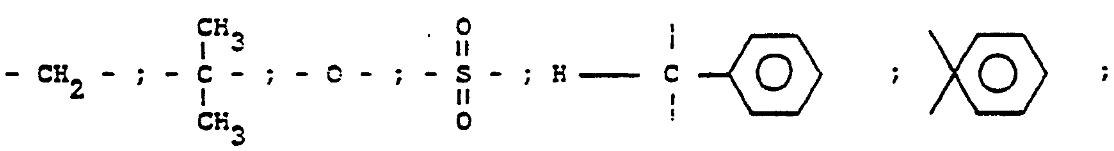

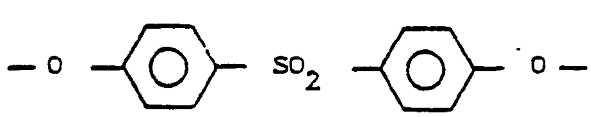

— (b) une diamine à groupement diorganopolysiloxane répondant essentiellement à la formule suivante :

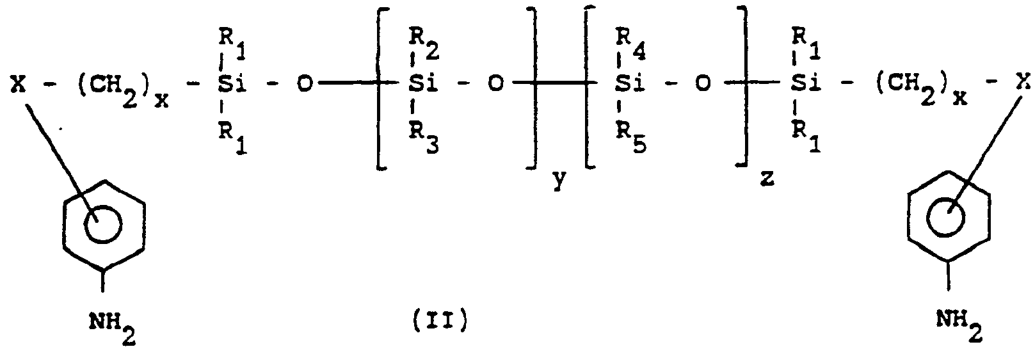

(II)

dans laquelle :

- X, qui est en position ortho, méta ou para par rapport à l'atome de carbone du cycle benzénique relié à l'azote, représente un atome ou groupement suivant :

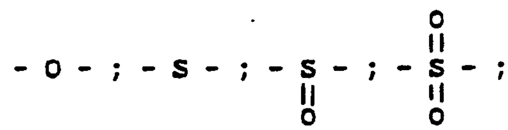

- $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement—CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8.
- les symboles y et z représentent des nombres, identiques ou différents, entiers ou fractionnaires, dont la somme se situe dans l'intervalle allant de 0 à 100 ;

— (c) éventuellement un N,N'-bis-maléimide à groupement diorganopolysiloxane répondant essentiellement à la formule générale et tel que décrit dans EP-A-284519 :

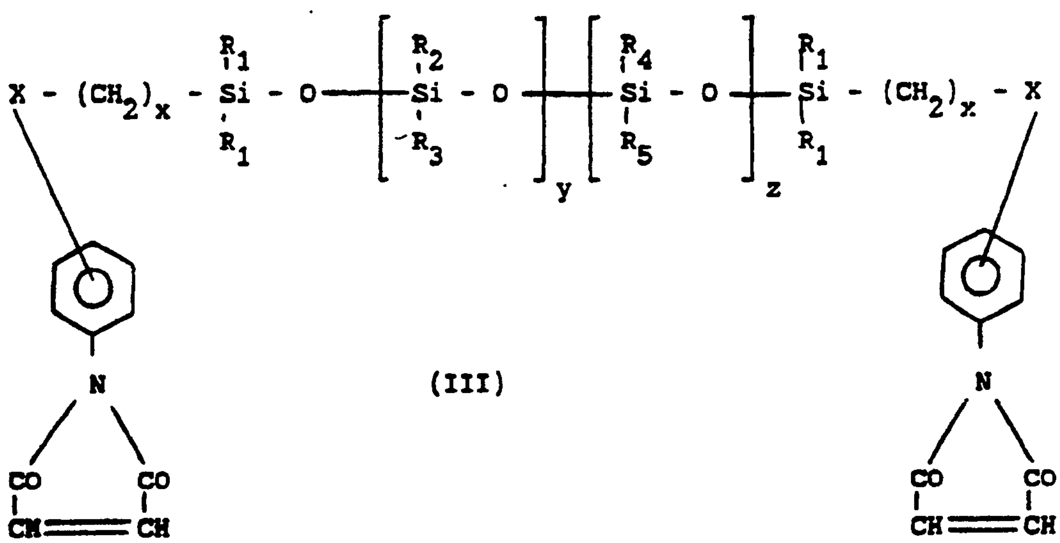

(III)

dans laquelle X, $R_1$, $R_2$, $R_3$, $R_4$, $R_5$, x, y et z ont les significations données ci-avant pour la formule (II) ;

— (d) éventuellement un ou plusieurs monomères autres qu'un bis-maléimide de formule (I) ou de formule (III) et comportant une ou plusieurs doubles liaisons carbone-carbone polymérisable ;

— (e) éventuellement un catalyseur.

A titre d'exemples spécifiques de bis-maléimides de formule (I), on peut citer en particulier :

— le N,N'-métaphénylène-bis-maléimide,
— le N,N'-paraphénylène-bis-maléimide,
— le N,N'-4,4'-diphénylméthane-bis-maléimide,
— le N,N'-4,4'-diphényléther-bis-maléimide,
— le N,N'-4,4'-diphénylsulfone-bis-maléimide,
— le N,N'-cyclohexylène-1,4-bis maléimide,
— le N,N'-4,4'-diphényl-1,1 cyclohexane-bis-maléimide,
— le N,N'-4,4'-diphényl-2,2 propane-bis-maléimide,
— le N,N'-4,4'-triphénylméthane-bis-maléimide,
— le N,N'-méthyl-2 phénylène-1,3-bis-maléimide,
— le N,N'-méthyl-4 phénylène-1,3-bis-maléimide,
— le N,N'-méthyl-5 phénylène-1,3-bis-maléimide.

Ces bis maléimides peuvent être préparés selon les procédés décrits dans le brevet américain US-A-3.018.290 et le brevet anglais GB-A-1.137.290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A propos des diamines siloxanes de formule (II) et des bis-maléimides siloxanes de formule (III), lorsque y et/ou z sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de y et/ou z qui peut être entière ou fractionnaire.

Quand la préparation des polymères selon l'invention est effectuée, selon les indications données ci-après, au sein d'un diluant ou solvant organique, on peut utiliser l'une quelconque des diamines de formule (II) et, éventuellement, l'un quelconque des bis-maléimides de formule (III).

Comme diamines et comme bis-maléimides éventuels préférentiellement représentatifs, on peut citer ceux qui répondent à la formule (II) et éventuellement à la formule (III) dans lesquelles :

1. X = —O— ; $R_1$, $R_2$, $R_3$, $R_4$ et $R_5$, identiques ou différents, représentent chacun un radical alkyle, linéaire ou ramifié, ayant de 1 à 6 atomes de carbone ; x = 2, 3, 4 ou 5 ; y + z se situe dans l'intervalle allant de 0 à 100 et, de préférence, de 4 à 70.
2. X = —O— ; $R_1$, $R_2$, $R_3$, identiques ou différents, représentent chacun un radical alkyl linéaire ou ramifié, ayant de 1 à 6 atomes de carbone ; $R_4$, $R_5$ représentent chacun un radical phényle ; x = 2,3,4 ou 5 ; y + z se situe dans l'intervalle allant de 0 à 100 et, de préférence, de 4 à 70.
3. X = —O— ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 ; y + z se situe dans l'intervalle allant de 0 à 100 et, de préférence, de 4 à 70.
4. X = —O— ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 0 à 100 et, de préférence, de 4 à 70.

Comme diamines et comme bis-maléimides éventuels, encore plus préférentiellement représentatifs, on peut citer ceux qui répondent à la formule (II) et éventuellement à la formule (III) dans lesquelles :

5. X = —O— ; $R_1 = R_2 = R_3 = R_4 = R_5$ = radical alkyle, linéaire ayant de 1 à 3 atomes de carbone ; x = 2, 3 ou 4 ; y + z se situe dans l'intervalle allant de 0 à 100 et, de préférence, de 4 à 70.
6. X = —O— ; $R_1 = R_2 = R_3$ = radical alkyle, linéaire ayant de 1 à 3 atomes de carbone ; $R_4 = R_5$ radical phényle ; x = 2, 3 ou 4 ; y + z se situe dans l'intervalle allant de 0 à 100 et, de préférence, de 4 à 70.
7. X = —O— ; $R_1 = R_2 = R_4$ = radical alkyle, linéaire ayant de 1 à 3 atomes de carbone ; $R_3 = R_5$ = un radical phényle ; x = 2, 3 ou 4 ; y + z se situe dans l'intervalle allant de 0 à 100 et, de préférence, de 4 à 70.
8. X = —O— ; $R_1$ = radical alkyle linéaire ayant de 1 à 3 atomes de carbone ; $R_2 = R_3 = R_4 = R_5$ = radical phényle ; x = 2, 3 ou 4 ; y + z se situe dans l'intervalle allant de 0 à 100 et, de préférence, de 4 à 70.

Comme diamines et comme bis-maléimides éventuels, qui sont tout particulièrement représentatifs, on peut citer ceux qui répondent à la formule (II) et éventuellement à la formule (III) dans lesquelles :

9. X = —O— ; $R_1 = R_2 = R_3 = R_4 = R_5$ = radical méthyle ; x = 3 ; y + z se situe dans l'intervalle allant de 0 à 100 et, de préférence, de 4 à 70.
10. X = —O— ; $R_1 = R_2 = R_3$ = radical méthyle ; $R_4 = R_5$ = radical phényle ; x = 3 ; y + z se situe dans l'intervalle allant de 0 à 100 et, de préférence de 4 à 70.
11. X = —O— ; $R_1 = R_2 = R_4$ = radical méthyle ; $R_3 = R_5$ = radical phényle ; x = 3 ; y + z se situe dans l'intervalle allant de 0 à 100 et, de préférence, de 4 à 70.
12. X = —O— ; $R_1$ = radical méthyle ; $R_2 = R_3 = R_4 = R_5$ = radical phényle ; x = 3 ; y + z se situe dans l'intervalle allant de 0 à 100 et, de préférence, de 4 à 70.

Comme exemples spécifiques de diamines siloxanes tout particulièrement représentatives, on citera notamment :

13. 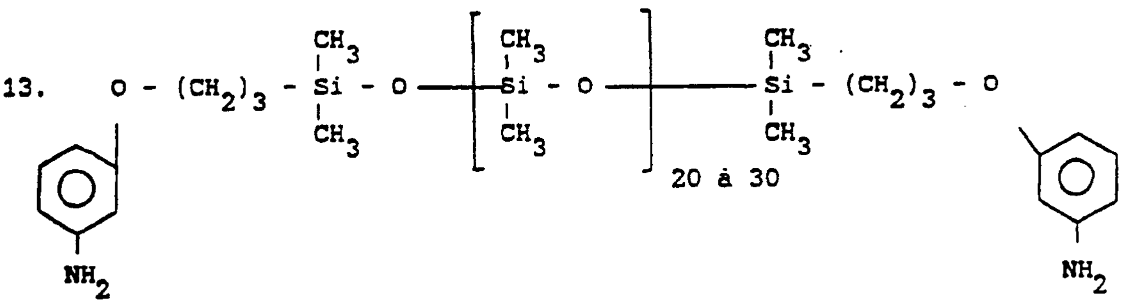

14. 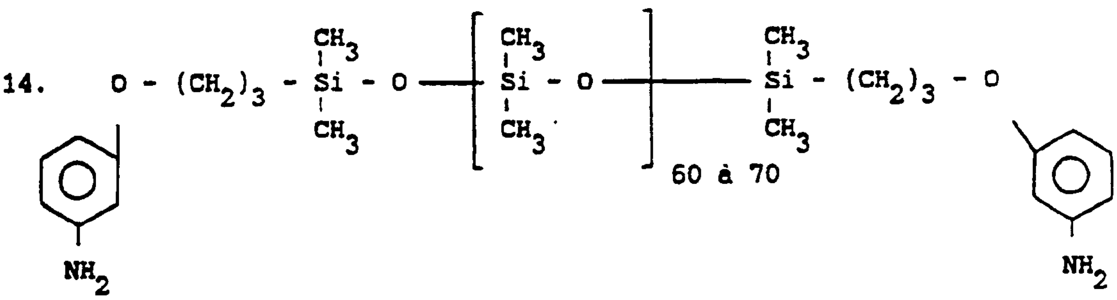

15. 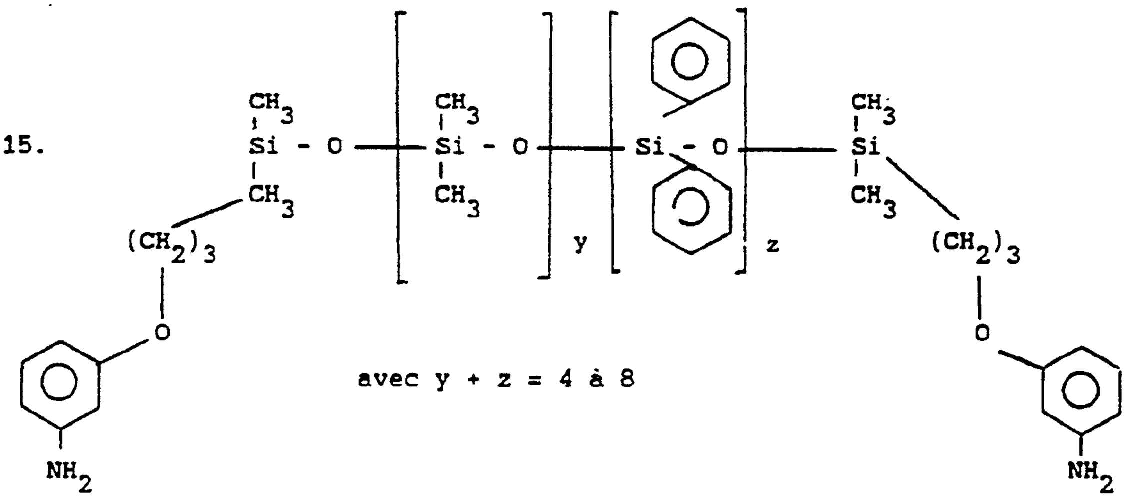

avec y + z = 4 à 8

16. 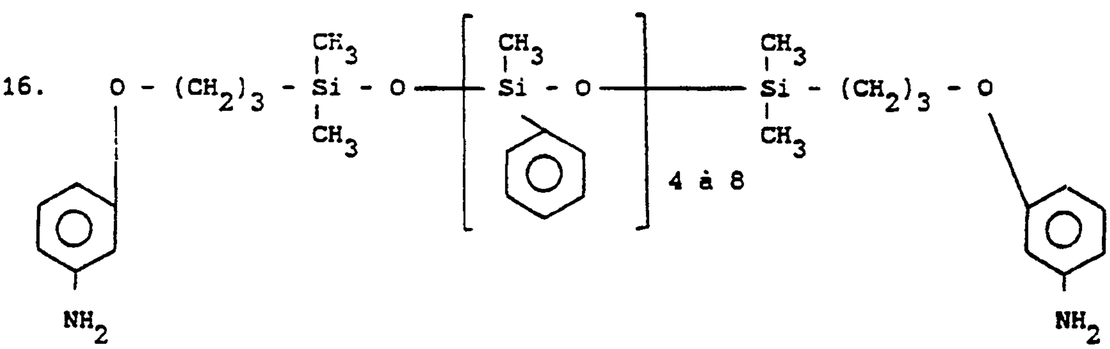

Comme exemples spécifiques de bis-maléimides siloxanes éventuellement utilisables qui sont tout particulièrement représentatifs, on citera notamment :

17. 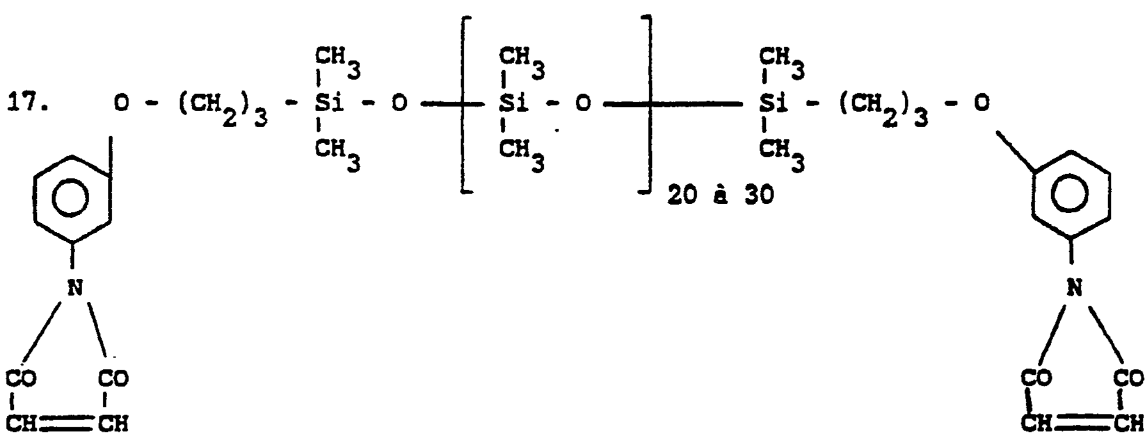

18.

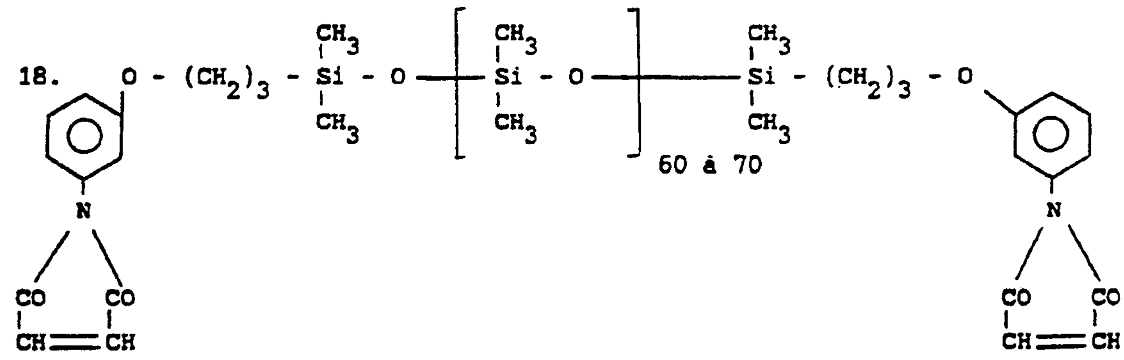

19.

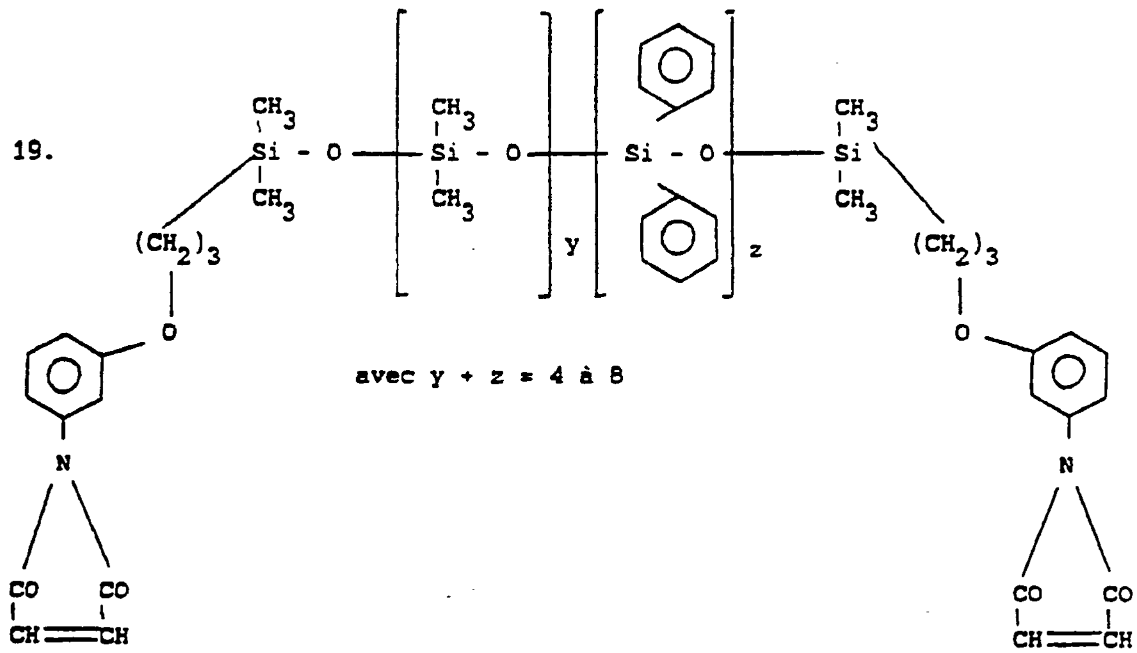

avec y + z = 4 à 8

20.

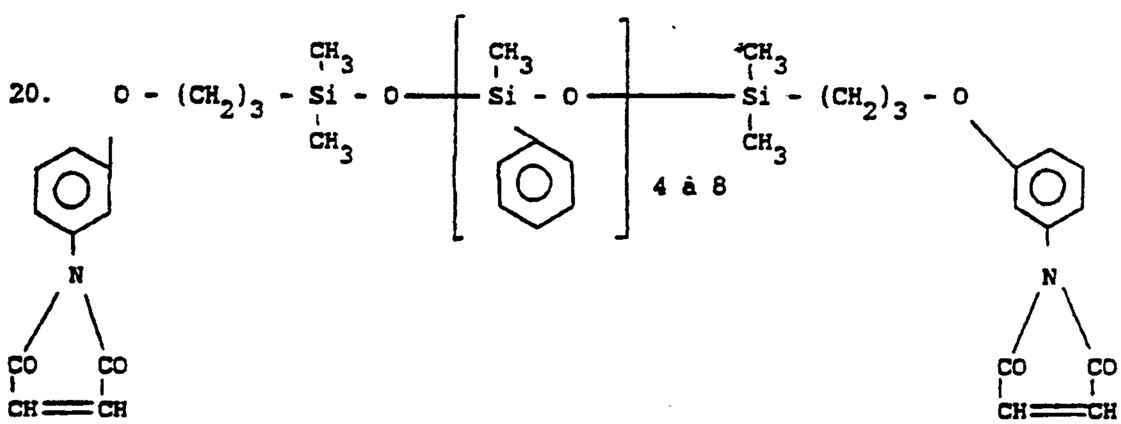

Quand la préparation des polymères selon l'invention est effectuée en masse, on utilise de préférence comme diamines de formule (II) et comme bis-maléimides éventuels de formule (III) ceux où le groupement diorganopolysiloxane renferme une pluralité de liaisons Si-phényle ou Si-phényle substitué. Des composés de ce type qui conviennent sont ceux appartenant aux groupes suivants, classés par ordre croissant de préférence :

— composés n° 2, 3 et 4 ;
— composés n° 6, 7 et 8 ;
— composés n° 10, 11 et 12 ;

Parmi les diamines et les bis-maléimides éventuels appartenant à ces groupes préférés, ceux qui conviennent tout particulièrement bien pour préparer des polymères en masse sont les composés dans lesquels le rapport :

$$\frac{\text{nombre de liaisons Si-phényle (éventuellement substitué)}}{\text{nombre de liaisons Si-alkyle}}$$

est au moins égal à 0,25 ; à titre d'exemples spécifiques de diamines et de bis-maléimides éventuels de ce type, on se reportera notamment aux composés n° 16 et 20.

Les diamines de formule (II) à groupement diorganopolysiloxane sont des composés qui sont bien connus dans l'art antérieur. Elles sont par exemple décrites dans le brevet anglais GB-B-1.062.418 et dans le brevet américain US-A-4.395.527.

Selon ces documents, une première méthode de préparation de ces diamines, applicable en particulier lorsque l'on peut obtenir un composé de formule (II) où y = z = 0, c'est à dire lorsque l'on peut obtenir une diamine à groupement diorganodisiloxane, consiste à faire réagir un composé de formule

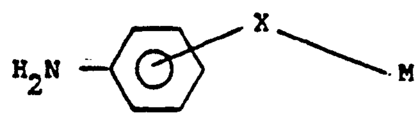

où X a la signification donnée ci-avant et M est un métal alcalin ou alcalino-terreux, avec un bis(halogénoalkyl)disiloxane de formule :

$$Y - (CH_2)x - \underset{R_1}{\overset{R_1}{\underset{|}{\overset{|}{Si}}}} - O - \underset{R_1}{\overset{R_1}{\underset{|}{\overset{|}{Si}}}} - (CH_2)_x - Y$$

où x a la valeur indiquée ci-avant et Y est un atome de chlore, de brome ou d'iode, en opérant à une température comprise entre 20° et 200°C en présence d'un solvant polaire aprotique.

Dans le cas où l'on veut obtenir une diamine de formule (II) où y et/ou z sont différents de zéro, une seconde méthode de préparation enseignée par ces documents consiste à copolymériser une mole de diamine à groupement diorganopolysiloxane, préparée comme indiqué ci-dessus, avec une quantité d'un ou plusieurs diorganopolysiloxanes cycliques capables de donner y moles de groupes siloxy de formule :

$$- \underset{R_3}{\overset{R_2}{\underset{|}{\overset{|}{Si}}}} - O$$

et/ou z moles de groupes siloxy de formule :

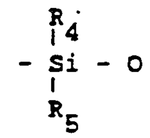

En général, la réaction se déroule à une température comprise entre 80° et 250°C en présence là aussi d'un solvant et éventuellement d'un catalyseur approprié.

Une autre façon de préparer les diamines de formule (II), avec y et/ou z étant égaux à zéro ou différents de zéro, est de faire réagir sur un composé à insaturation éthylénique de formule :

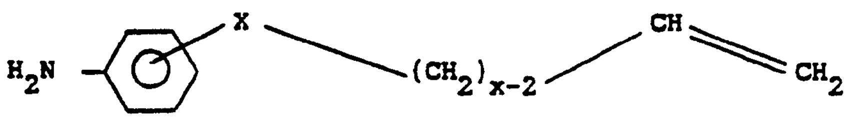

dans laquelle X, qui est en position ortho, méta ou para par rapport à l'atome de carbone du cycle benzénique relié à l'azote, et x ont les significations données ci-avant, un alpha, oméga-bis(hydrogéno) diorganopolysiloxane de formule :

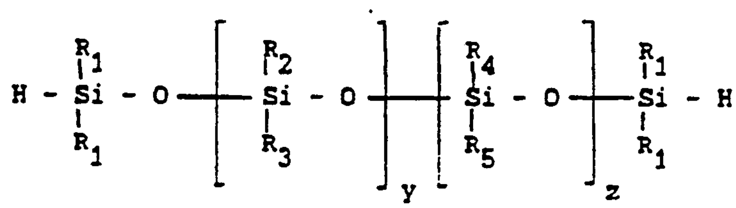

dans laquelle $R_1$, $R_2$, $R_3$, $R_4$, $R_5$, y et z ont les significations données ci-avant. Cette réaction d'hydrosilylation est conduite en opérant en masse en absence de solvant et en utilisant un catalyseur à base de platine. Les alpha, oméga-bis(hydrogéno)diorganopolysiloxanes mis en oeuvre sont des produits bien connus dans l'industrie des silicones et sont, pour certains, disponibles dans le commerce. Ils sont par exemple décrits dans les brevets français FR-A1-2.486.952 et FR-A5-2.058.988.

Quand on choisit de faire appel à cette réaction d'hydrosilylation pour préparer une diamine de formule (II), le substrat aminé à insaturation éthylénique qui est bien adapté pour réagir avec l'alpha, oméga-bis-(hydrogéno)diorganopolysiloxane consiste notamment dans une allyloxyaniline de formule :

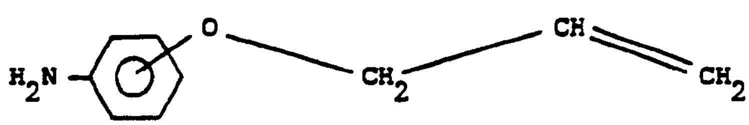

Dans ces conditions privilégiées, on est donc conduit à des diamines de formule (II) où X = —O—, x = 3 et $R_1$, $R_2$, $R_3$, $R_4$, $R_5$, y et z ont les significations générales ou précises données ci-avant.

S'agissant des bis-maléimides siloxanes facultatifs de formule (III), ce sont des composés originaux qui sont obtenus en faisant réagir la diamine de formule (II) avec l'anhydride maléique en présence d'un agent déshydratant, d'une amine tertiaire, d'un diluant organique et d'un catalyseur.

L'anhydride maléique est utilisé en quantités au moins égales à une mole par fonction $NH_2$ disponible ; on utilise généralement des quantités plus importantes qui sont de l'ordre de 1,01 à 1,5 moles par fonction $NH_2$ disponible.

Comme déshydratant on utilise avantageusement un anhydride d'acide carboxylique inférieur tel que l'anhydride acétique en quantité au moins égale à une mole par fonction $NH_2$ disponible présent dans la molécule de diamine de formule (II) engagée. On utilise généralement des quantités plus importantes qui sont de l'ordre de 1,05 à 1,5 moles par fonction $NH_2$ disponible.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N,N-diméthylaniline sont d'un emploi avantageux. Les quantités d'amine tertiaire se situent généralement entre 0,05 et 0,8 moles par fonction $NH_2$ disponible.

La réaction est effectuée au sein d'un diluant organique liquide dans les conditions opératoires, pratiquement entre 20° et 100° à la pression atmosphérique. Parmi les diluants utilisables, on donnera la préférence à ceux qui dissolvent, dans les conditions de température adoptées pour la réaction et en présence des autres constituants du mélange réactionnel, l'anhydride maléique de départ.

Parmi eux on peut citer notamment :

— les hydrocarbures tels que le benzène, le toluène, le cyclohexane,

— les dérivés chlorés tels que le chlorobenzène ou le chlorure de méthylène,

— les éthers oxydes cycliques ou non cycliques tels que le tétrahydrofuranne, le dioxane ou l'éther éthylique,

— les dialkylcétones telles que l'acétone ou la méthyl éthyl cétone.

En tant que catalyseurs, on peut utiliser un dérivé du nickel soluble dans la phase liquide du mélange réactionnel comme par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles, de l'ordre de $0,5.10^{-3}$ à $5.10^{-3}$ moles par mole fonction $NH_2$ disponible.

Pratiquement, pour la mise en oeuvre du procédé, on commence par faire réagir l'anhydride maléique et la diamine de formule (II) en opérant dans le diluant choisi à une température allant de 30° à 100°C pendant une durée allant, selon la température, de quelques minutes à 1 heure. Puis on ajoute dans le milieu réactionnel l'agent déshydratant, l'amine tertiaire et enfin le catalyseur, puis on laisse réagir le mélange dans les conditions de température adoptées précédemment pendant une durée allant, selon la température, de 1 heure à 3 heures. Généralement, la réaction est terminée par addition d'un non solvant tel que l'eau, puis le bis-maléimide de formule (III) préparé est isolé selon les méthodes usuelles.

Vis à vis des polyimides obtenus selon le brevet français FR-A-1.555.564 par chauffage notamment de N,N'-4,4'-diphénylméthane-bis-maléimide et d'une diamine ne comportant pas de groupement diorganopolysiloxane, on a constaté que le remplacement de la diamine de l'art antérieur par une diamine siloxane de formule (II) permet d'obtenir des polymères durcis ayant, notamment, des modules en flexion qui sont nettement améliorés. L'ajout dans le milieu de polymérisation, contenant la diamine siloxane, d'un N,N'-bis-maléimide à groupement diorganopolysiloxane de formule (III) est une mesure permettant en outre d'améliorer nettement les propriétés de résilience des polymères durcis.

Il peut être avantageux dans certains cas de modifier les polymères selon la présente invention par emploi d'un réactif copolymérisable (d). Comme réactif facultatif (d) qui convient bien, on peut citer en particulier :

♦ quand on souhaite par exemple abaisser la fluidité du milieu de polymérisation :

($d_1$) soit un ou plusieurs monomères de formule :

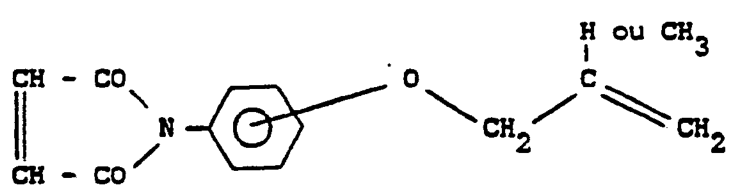

(IV)

dans laquelle le radical allyloxy ou méthallyloxy est en position ortho, métha ou para par rapport à l'atome de carbone du cycle benzénique relié à l'azote ;

($d_2$) soit un composé comprenant :

— un mélange d'un monomère de formule :

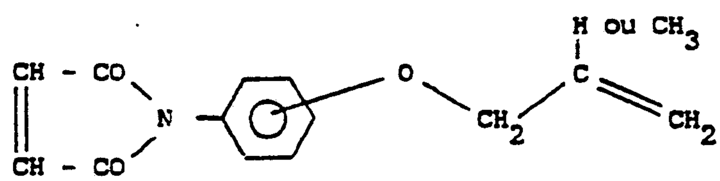

(IV)

dans laquelle le radical allyloxy ou méthallyloxy est en position ortho, méta ou para par rapport à l'atome

de carbone du cycle benzénique relié à l'azote.

— avec :

• au moins un dérivé monosubstitué de formule :

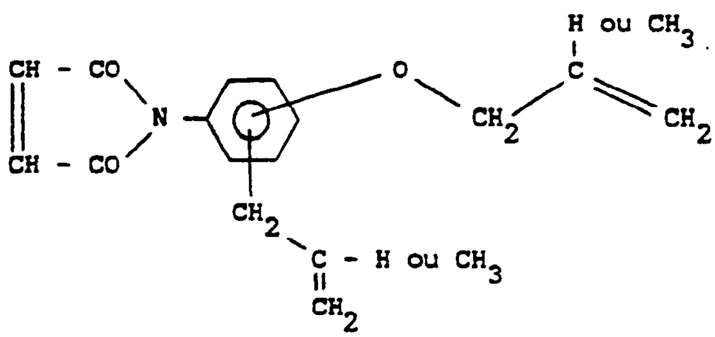

(V)

• et éventuellement un ou plusieurs dérivés disubstitués de formule :

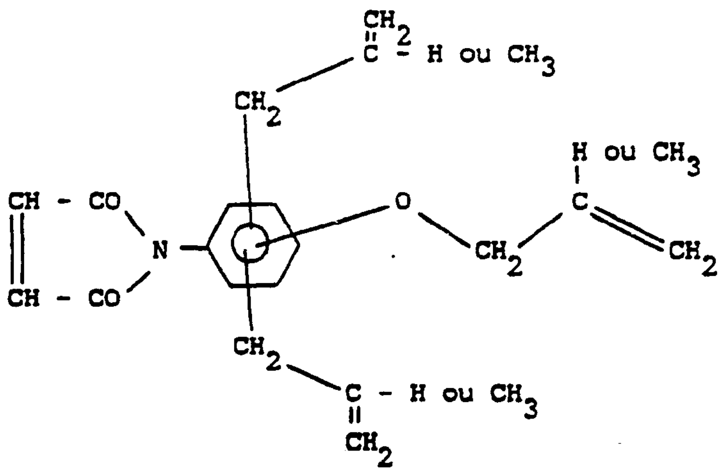

(VI)

Dans le composé précité servant de réactif ($d_2$), les proportions des divers constituants du mélange des produits de formules (IV), (V) et éventuellement (VI) peuvent varier dans de larges limites. De manière générale, les proportions des constituants sont choisies entre les limites suivantes (exprimant le pourcentage pondéral de chacun des constituants dans le mélange) :

— au moins 30%, et de préférence de 50% à 80% de N-(méth)allyloxyphénylmaléimide de formule (IV),

— de 5% à 50% et de préférence de 10% à 35% de dérivé(s) mono-(méth)allyl substitué(s) de formule (V),

— et de 0% à 20% et de préférence de 0% à 15% de dérivé(s) di-(méth)allyl substitué(s) de formule (VI),

la somme des constituants devant dans chaque cas être égale à 100% en poids.

♦ quand on souhaite par exemple améliorer davantage les propriétés de flexion à chaud :

($d_3$) un ou plusieurs hétérocycles substitués comportant une ou plusieurs doubles liaisons carbone-carbone.

Il doit être bien entendu que l'on peut utiliser, comme réactif (d), des mélanges de réactifs ($d_1$) + ($d_3$) ou ($d_2$) + ($d_3$).

S'agissant du réactif facultatif ($d_1$), il est choisi parmi :

— le N-(allyloxy-2 phényl)maléimide,

— le N-(allyloxy-3 phényl)maléimide,

— le N-(allyloxy-4 phényl)maléimide,

— le N-(méthallyloxy-2 phényl)maléimide,

— le N-(méthallyloxy-3 phényl)maléimide,

— le N-(méthallyloxy-4 phényl)maléimide,

— et leurs mélanges.

Les maléimides de formule (IV) sont des produits connus qui sont décrits dans la demande de brevet européen EP-A1-0208.634.

S'agissant du réactif facultatif ($d_2$), on utilise de préférence comme composé comprenant un mélange de

N-(méth)allyloxyphénylmaléimide de formule (IV) avec un ou plusieurs dérivés de substitution (méth)allylés de formule(s) (V) et éventuellement (VI), le produit brut obtenu par mise en oeuvre du procédé ci-après défini.

Ce procédé est caractérisé en ce qu'il consiste à réaliser les 3 étapes suivantes qui sont enchaînées dans le même réacteur :

— la première étape consiste à faire réagir en milieu solvant un aminophénol avec de l'anhydride maléique en opérant à une température allant de 20° C à 200°C, pendant une durée allant, selon la température choisie, de 30 minutes à 2 heures et elle conduit à un premier milieu réactionnel comprenant un acide N-(hydroxyphényl)maléamique ;

— la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40°C à 150°C et elle conduit, après acidification et élimination de la phase aqueuse, à un second milieu réactionnel organique comprenant un acide N-[(méth)allyloxyphényl] maléamique, un ou plusieurs acides N-[(méth)allyloxy, (méth)allyl-phényl] maléiques et éventuellement un ou plusieurs acides N-[(méth)allyloxy, di(méth)allylphényl] maléamiques ;

— la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé de : au moins 30% en poids et de préférence de 50% à 80% de N-(méth)allyloxyphénylmaléimide, de 5% à 50% en poids et de préférence de 10% à 35% en poids d'un ou plusieurs N-[(méth)allyloxy, (méth)allylphényl] maléimides et de 0% à 20% en poids et de préférence de 0 à 15% en poids d'un ou plusieurs N-[(méth)allyloxy, di(méth)allylphényl] maléimides.

Les 3 étapes qui viennent d'être décrites sont enchaînées dans un solvant unique pour une plus grande simplicité du procédé, mais il est possible d'opérer un changement de solvant, au cours de telle ou telle étape, sans inconvénient. Le choix du solvant peut être très large, mais, comme la deuxième étape est réalisée en milieu biphasique hydro-organique, il peut être souhaitable de mettre en oeuvre un solvant organique non miscible à l'eau, ce qui simplifie considérablement le traitement de la masse réactionnelle. Parmi les solvants miscibles ou non miscibles à l'eau utilisables, on donnera en fait la préférence à ceux qui dissolvent, dans les conditions de température adoptées pour la synthèse, l'aminophénol de départ. Parmi ces solvants, on peut citer par exemple : les alcools (comme par exemple : méthanol, éthanol, butanol) ; les cétones (comme par exemple : acétone, méthyléthylcétone, méthylisobutylcétone) ; les nitriles (comme par exemple : benzonitrile, propionitrile, acétonitrile) ; les esters (comme par exemple : acétate d'éthyle, de butyle) ; des solvants aromatiques (comme par exemple : anisole, chlorobenzène) ; des hydrocarbures halogénés (comme par exemple : chloroforme, dichlorométhane, dichloroéthane).

S'agissant de la première étape du procédé, on peut dire que la concentration des réactifs de départ dans le solvant utilisé n'est pas critique. On n'a pas intérêt tout de même ni à trop diluer pour des raisons de productivité, ni à trop concentrer pour avoir une bonne agitabilité. Dans cette première étape l'anhydride maléique est utilisé en quantités au moins égales à une mole par mole d'aminophénol ; on utilise généralement des quantités plus importantes qui sont de l'ordre de 1,01 à 1,5 moles par mole d'aminophénol. De plus la température se situe de préférence entre 40°C et 60°C.

S'agissant de la deuxième étape, on commence par ajouter dans le milieu réactionnel la quantité d'une solution aqueuse alcaline, par exemple d'une solution aqueuse de NaOH, nécessaire d'une part pour salifier l'acide N-(hydroxyphényl) maléamique et d'autre part pour obtenir le pH désiré. Le pH sera maintenu constant pendant toute la réaction par ajout de soude ; de manière préférentielle, le pH est ajusté et maintenu à une valeur constante comprise entre 10 et 12. La réaction d'allylation est réalisée de préférence avec le bromure ou le chlorure de (méth)allyle. La quantité d'halogénure de (méth)allyle est de l'ordre de 1,5 à 10 moles par groupement molaire OH phénolique et, de préférence, de l'ordre 2 à 4. L'excès de ce réactif peut être récupéré en fin d'opération et recyclé dans une opération suivante. Le temps de coulée de l'halogénure de (méth)allyle n'est pas critique et il peut se situer dans l'intervalle allant de 1 heure à 5 heures, et, de préférence, allant de 2 heures à 4 heures. Dans cette deuxième étape, la température se situe de préférence entre 60°C et 100°C. A noter qu'en fin d'étape la phase aqueuse est acidifiée jusqu'à un pH environ égal à 1 par des acides habituels, de préférence des oxyacides ou des hydracides minéraux. La couche aqueuse est éliminée et on laisse dans le réacteur la couche organique.

S'agissant de la troisième étape du procédé, on utilise, avantageusement comme anhydride d'acide carboxylique inférieur, l'anhydride acétique en quantités au moins égales à une mole par groupement molaire HOOC-CH=CH-CO-NH à cycliser. On utilise généralement des quantités plus importantes qui sont de l'ordre de 1,05 à 1,5 moles par groupement maléamique.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N,N'-diméthylaniline sont d'un emploi avantageux. Les quantités d'amine tertiaire se situent entre 0,05 et 2 moles par groupement molaire HOOC-CH=CH-CONH—.

En tant que catalyseurs, on peut utiliser par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles, de l'ordre de 0,05 à 1,5 g par groupement molaire HOOC-CH=CH-CO-NH— et, de préférence, de l'ordre de 0,1 à 0,8 g.

Dans cette troisième étape, la température n'est pas critique et n'a une incidence que sur la cinétique de la réaction. Cette température peut être comprise par exemple entre 40°C et 150°C et, de préférence, entre 60°C et 80°C. En fin de cette étape, le solvant est éliminé par distillation sous vide et on obtient le produit brut de réaction ayant l'aspect d'une huile.

Conformément à une modalité très préférée de mise en oeuvre, le procédé précité s'applique bien, au départ de métaaminophénol, à la préparation des composés comprenant des mélanges à base de : N-[(méth)allyloxy-3 phényl] maléimide + N-[(méth)allyloxy-3 (méth)allyloxy-4 phényl] maléimide + N-[(méth)allyloxy-3(méth)allyl-6 phényl] maléimide+éventuellement N-[(méth)allyloxy-3 di(méth)allyl-4,6 phényl] maléimide.

A noter qu'au départ d'orthoaminophénol, on est conduit à des composés comprenant des mélanges à base de : N-[(méth)allyloxy-2 phényl] maléimide + N-[(méth)allyloxy-2 (méth)allyl-3 phényl] maléimide + N-[(méth)allyloxy-2 (méth)allyl-5 phényl] maléimide + éventuellement N-[(méth)allyloxy-2 di(méth)allyl-3,5 phényl] maléimide. A noter encore qu'au départ de paraaminophénol, on est conduit à des composés comprenant des mélanges à base de : N-[(méth)allyloxy-4 phényl] maléimide + N-[(méth)allyloxy-4 (méth)allyl-3 phényl] maléimide + éventuellement N-[(méth)allyloxy-4 di(méth)allyl-3,5 phényl] maléimide.

S'agissant du réactif facultatif ($d_3$), il est choisi parmi : les vinylpyridines, la N-vinylpyrrolidone, l'isocyanurate d'allyle, le triallylisocyanurate, le vinyltétrahydrofuranne.

La réactivité des constituants (a), (b) et éventuellement (c) et/ou (d) du milieu de polymérisation selon l'invention peut être accrue, par exemple lorsque les applications envisagées demandent de réaliser des opérations de moulage par injection sur machine, par addition d'un catalyseur (e) qui peut être soit ($e_1$) un initiateur de polymérisation radicalaire tel que par exemple, le péroxyde de dicumyle, le péroxyde de lauroyle, l'azobisisobutyronitrile, soit ($e_2$) un composé imidazole.

Ledit composé imidazole ($e_2$) répond à la formule générale :

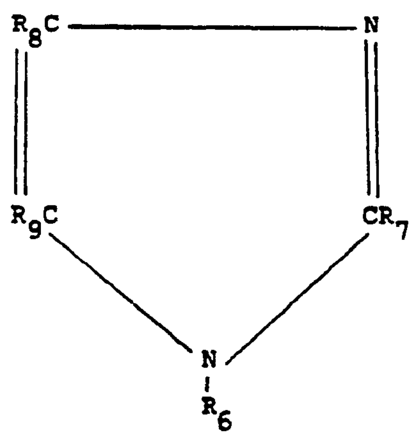

(VII)

dans laquelle $R_6$, $R_7$, $R_8$ et $R_9$, identiques ou différents, représentent chacun : un atome d'hydrogène, un radical alkyle ou alcoxy ayant de 1 à 20 atomes de carbone, vinyle, phényle, nitro, $R_8$ pouvant former avec $R_9$ et les atomes de carbone auxquels sont liés ces radicaux un cycle unique comme par exemple un cycle benzénique, $R_6$ pouvant également représenter un groupement carbonyle lié à un deuxième cycle imidazole.

Comme exemples spécifiques de composés imidazole ($e_2$), on peut citer en particulier : l'imidazole ou glyoxaline, le méthyl-1 imidazole, le vinyl-2 imidazole, le diméthyl-1,2 imidazole, le vinyl-1 imidazole, le vinyl-1 méthyl-2 imidazole, le benzimidazole, le carbonyldiimidazole.

Dans les polymères thermostables qui viennent d'être définis, on choisit les quantités de réactifs (a) et (b) de manière à avoir, en poids par rapport au poids total de ces constituants :

— de 50 à 98% et, de préférence, de 70 à 95% de bis maléimide(s) (a) de formule (I),

— de 2 à 50% et, de préférence, de 5 à 30% de diamine siloxane (b) de formule (II).

S'agissant de la quantité du bis-maléimide siloxane facultatif (c) de formule (III), elle représente généralement moins de 40% et, de préférence, de 5 à 30% du poids total des réactifs (a) + (b). Plus préférentiellement encore, cette quantité représente de 10 à 20% du poids total des réactifs (a) + (b).

S'agissant de la quantité du réactif facultatif (d), elle représente généralement moins de 60% et, de préférence, de 5% à 50% du poids total des réactifs (a) + (b).

S'agissant du catalyseur facultatif (e), selon sa nature et selon la vitesse de polymérisation souhaitée au stade de la mise en oeuvre, on l'utilise à un taux se situant dans l'intervalle allant de 0,01 à 1% en poids par rapport à l'ensemble des réactifs (a) + (b) + éventuellement (c) et/ou (d) et, de préférence, allant de 0,05 à 0,5%.

Les polymères selon l'invention peuvent être préparés par chauffage direct du réactif (a), du réactif (b) et éventuellement des réactifs (c) et/ou (d) avec au besoin le catalyseur (e) au moins jusqu'à l'obtention d'un mélange liquide homogène. La température peut varier en fonction de l'état physique des composés en présence mais elle se situe généralement entre 50°C et 300°C. Il est avantageux d'amener et de maintenir les composés de départ dans un état de mélange intime avant et pendant le chauffage à l'aide par exemple d'une bonne agitation. Quand on utilise le composé (e), celui-ci est de préférence ajouté au départ dans le mélange réactionnel bien agité contenant les réactifs. Lorsque ce composé est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant soit le réactif (b), soit le réactif (c) quand on en utilise un, soit encore un des liquides organiques polaires dont on parle ci-après.

La préparation des polymères selon l'invention peut aussi être effectuée par chauffage du mélange des réactifs au sein d'un diluant organique qui est liquide dans une partie au moins de l'intervalle 50°C-250°C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, la méthylglycol, la cyclohexanone et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120°C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200°C (en général ce point de ramollissement est compris entre 50° et 150°C). Ces prépolymères peuvent être obtenus en masse en chauffant le mélange des réactifs jusqu'à l'obtention d'un produit homogène ou pâteux à une température généralement située entre 50° et 180°C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du composé (e) et il s'agit de celle indiquée ci-avant à propos de la préparation directe de polymères durcis. La préparation des prépolymères peut également être effectuée en suspension ou en solution dans un diluant qui est liquide dans une partie au moins de l'intervalle 50°-180°C.

Dans le cas où l'on choisit de faire appel aux réactifs facultatifs (c) et/ou (d), il faut noter que ces prépolymères (P) peuvent également être obtenus en formant, à partir du réactif (a) et du réactif (b), un prépolymère (PP) qui est ensuite mis à réagir avec les réactifs (c) et/ou (d) et au besoin le composé (e). On peut encore préparer au préalable un prépolymère (P'P') en chauffant le mélange de réactif (b), de réactifs (c) et/ou (d) et au besoin de composé (e), puis en le faisant réagir avec le réactif (a) pour obtenir le prépolymère (P). Les conditions de température et de durée utilisées pour la préparation des prépolymères (PP) ou (P'P') et pour leur transformation en prépolymères (P) sont celles indiquées ci-avant à propos de la préparation des prépolymères (P) par mélange direct des réactifs (a), (b) et éventuellement (c) et/ou (d) avec au besoin le composé (e).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes.

Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300°C, généralement comprises entre 150° et 250°C ; une mise en forme complémentaire peut être effectuée pendant le durcissement, éventuellement sous vide ou sous une pression super-atmosphérique, ces opérations pouvant également être consécutives.

Dans le cas où l'on choisit de faire appel aux réactifs facultatifs (c) et/ou (d), on ne sort pas du cadre de l'invention si l'on prépare des polymères selon l'invention, qui ne sont pas sous l'aspect de prépolymères (P), en utilisant un mélange intime de prépolymère (PP), de réactifs (c) et/ou (d) et au besoin de composé (e) ou un mélange intime de prépolymère (P'P') et de réactif (a) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des températures de 200° à 300°C. A titre d'exemples, ils conviennent pour la fabrication d'isolants en plaques ou tubulaires pour transformateurs électriques, de supports de circuits imprimés, de pignons, de bagues etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces dériorées. Il est aussi possible de concevoir des pièces selon les techniques de l'enroulement filamentaire avec ou sans support ; il est encore possible de faire du moulage par injection ou de la pultrusion. On rappellera que pour faire par exemple des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymère (P), il peut être moulé par simple coulée à chaud où par injection et on provoque ensuite son durcissement par chauffage.

Les exemples suivants sont donnés à titre illustratif mais limitatif.

EXEMPLE 1

1. Exemple de mise en oeuvre de la présente invention :

Dans un réacteur en verre, muni d'un agitateur de type ancre et d'une tubulure latérale permettant le départ de produits volatils et préchauffé à 160°C à l'aide d'un bain d'huile approprié, on introduit en 5 minutes la moitié de la charge totale de N,N'-4,4'-diphénylméthane-bis-maléimide. Cette charge totale représente 48,15 g (0,134 mole). On ajoute ensuite 10,7 g (0,011 mole) de la diamine à groupement diorganopolysiloxane qui est décrite dans le paragraphe 2 ci-après et l'on monte alors la température à 180°C. On ajoute ensuite le reste de N,N'-4,4'-diphénylméthane-bis-maléimide (24,075 g) en 4 minutes sous agitation. On laisse réagir ainsi pendant 12 minutes, puis on applique pendant 3 autres minutes une pression réduite de $13.10^2$ Pa.

On coule ensuite le mélange réactionnel, qui est une masse liquide limpide de couleur rouge, dans un moule préchauffé à 200°C dans le but de préparer des plaques de dimensions 140 × 100 × 4 mm qui vont subir le cycle de cuisson suivant :

- 20 heures à 200°C
- 2 heures de 200°C à 25°C.

Après démoulage, les plaques à base de polymère durci sont découpées pour obtenir des éprouvettes :

- de dimensions 30 × 7 × 4 mm sur lesquelles on mesure la résistance à la rupture (Rf) et le module (Mf) en flexion (module d'Young : appareil INSTRON avec distance entre appuis de 25,4 mm) ;
- de dimensions 50 × 10 × 4 mm sur lesquelles on mesure la température de transition vitreuse (Tg) par DMA ("Dynamic Mechanical Analysis" ou Analyse Mécanique Dynamique). Les valeurs de Tg sont déterminées à partir des courbes de module en flexion en fonction de la température obtenues par Analyse Mécanique Dynamique réalisée sur un appareil dit DMA 983 de la Société DUPONT. La plage de températures balayée s'étend de 25°C à 400°C avec une vitesse de montée en température de 3°C/minute sous atmosphère inerte. La fréquence de résonnance est de 20 Hz. Les données sont recueillies et traitées par l'appareil dit Analyseur DUPONT 1090.

A titre d'essai comparatif, on a reproduit les opérations décrites ci-avant, mais en utilisant les réacitfs suivants :

N,N'-4,4'-diphénylméthane-bis-maléimide et diamino-4,4' diphénylméthane dans des proportions pondérales (82% en poids de bis-maléimide et 18% en poids de diamine) correspondant à celles de l'exemple 1. Ces réactifs sont introduits dans le réacteur préchauffé à 160°C. On dégage ensuite pendant 1 minute, puis on laisse réagir à 160°C pendant 9 minutes.

Les valeurs des propriétés mécaniques sont rassemblées dans le tableau suivant :

| | Rf intiale en MPa à 25° C | Mf initial en MPa à 25° C | Tg en ° C |
|---|---|---|---|
| EX1 | 100 | 5100 | 275 |
| Essai | 226 | 3400 | 300 |

2. Description du procédé de préparation de la diamine à groupement diorganopolysiloxane utilisée dans l'exemple 1 :

Cette diamine siloxane présente la formule suivante :

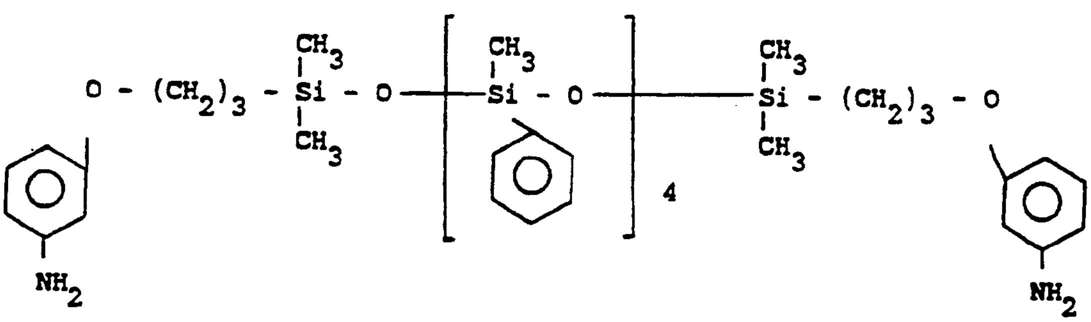

Dans un réacteur en verre muni d'une agitation centrale, d'une ampoule de coulée et d'un réfrigérant ascendant dans lequel on établit une légère surpression d'azote sec, on charge 312 g (0,46 mole) d'un alpha, oméga-bis-(hydrogéno)diorganopolysiloxane de formule :

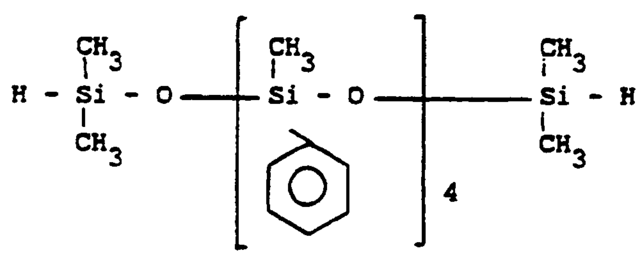

ayant une masse moléculaire de l'ordre de 678 g.

On introduit ensuite le réacteur dans un bain d'huile préchauffé à 55°C, puis on additionne le catalyseur. Ce dernier est le catalyseur de Karsted (complexe à base de platine élémentaire et de ligands divinyl-1,3 tétraméthyl-1,1,3,3 disiloxane) : il est en solution dans le toluène (concentration de 3,5% en poids) et on introduit avec une seringue 1,49 $cm^3$ de cette solution de catalyseur ; le rapport r (poids de platine élémentaire engagé/poids de la masse réactionnelle) est égale à $91.10^{-6}$.

Dans le réacteur, on coule ensuite progressivement 137 g (0,092 mole) de métaallyloxyaniline, pendant une durée de 60 minutes, de façon à contrôler l'exothermicité de la réaction. Trente minutes après la fin de la coulée, on revient à température ambiante. Le produit obtenu d'un poids de 448,9 g, est une huile visqueuse limpide, de couleur brun-orangé, présentant un spectre de RMN du proton en accord avec la structure de la diamine donnée ci-avant :

La masse moléculaire est de l'ordre de 976 g. Dans ces conditions, le taux de transformation des réactifs engagés est de 100% par (RMN et analyse infra-rouge, on ne détecte ni d'amine, ni d'oligomère siloxane hydrogéné) et le rendement en poids en diamine souhaitée est de 100%.

EXEMPLE 2

Autre exemple de mise en oeuvre de l'invention.

Dans le réacteur utilisé à l'exemple 1, on introduit à 160°C, en 2 minutes et sous agitation, 0,1 g d'imidazole dissout dans 20 g (0,020 mole) de la diamine à groupement diorganopolysiloxane qui est décrite ci-avant dans le paragraphe 2 de l'exemple 1. On charge ensuite en 5 minutes 80 g (0,233 mole) de N,N'-4,4'-diphénylméthane-bis-maléimide, puis on laisse réagir la masse réactionnelle pendant 13 minutes sous agitation. Au bout de ce temps, on refroidit la masse réactionnelle et on la soumet à un broyage.

Le prépolymère ainsi obtenu sous forme de poudre possède les caractéristiques suivantes : point de ramollissement : 100°C ; soluble à 45% en poids d'extrait sec dans la cyclohexanone ; le temps de gel à 150°C du collodion contenant 45% en poids du prépolymère dans la cyclohexanone est de 38 minutes (le temps de gel est mesuré à l'aide d'un appareil SUNSHINE ; le temps zéro est défini par la plongée du tube contenant le collodion dans un bain thermostaté à la température de mesure).

Avec ce prépolymère, on prépare un collodion contenant 45% en poids de prépolymère dans de la cyclohexanone. On utilise ce collodion pour enduire un tissu de verre fabriqué par la Société PORCHER sous la référence 7628 dont le grammage est de 200 g/m$^2$ et ayant subi un traitement par le gamma-aminopropyltriéthoxysilane A 1100 d'UNION CARBIDE. Le tissu imprégné est séché en atmosphère ventilée à 160°C pendant 12 minutes. On découpe ensuite 6 rectangles (145 × 100 mm) que l'on empile avec deux feuilles de cuivre de 35 micromètres d'épaisseur placées sur les deux faces extérieures de l'empilement et on place l'ensemble entre les plateaux d'une presse dans les conditions suivantes : chauffage 15 minutes à 160°C, puis 1 heure 15 minutes à 180°C sous 40.10$^5$ Pa ; et 16 heures à 200°C sous pression atmosphérique.

On examine l'adhérence du cuivre sur le stratifié à 6 plis préparé : cette adhérence, mesurée au dynamomètre INSTRON par traction du cuivre à 90° d'angle (selon la norme MIL P 55 617 B avec une vitesse de traction de 55 mm/min) est de l'ordre de 12,7 N/cm.

EXEMPLE 3

1. Autre exemple de mise en oeuvre de l'invention :

Dans la réaction utilisé à l'exemple 1, préchauffé à 160°C, on introduit le mélange constitué de 10 g (0,0088 mole) du bis-maléimide à groupement diorganopolysiloxanique qui est décrit dans le paragraphe 2 ci-après et de 0,1 g d'imidazole. Cette introduction se fait en 2 minutes sous agitation lente. Après avoir sorti le réacteur du bain d'huile chaud servant de moyen de chauffage, on ajoute alors en 2 minutes 10 g (0,010 mole) de la diamine à groupement diorganopolysiloxane qui est décrite ci-avant dans le paragraphe 2 de l'exemple 1. Le réacteur est replacé dans le bain d'huile thermostaté à 160°C et on additionne en 5 minutes, sous agitation, 80 g (0,223 mole) de N,N'-4,4'-diphénylméthane-bis-maléimide. On laisse réagir 9 minutes supplémentaires sous agitation (le milieu est homogène au bout de 5 minutes) et on applique une pression réduite de 10.10$^2$ Pa durant 2 minutes.

La masse réactionnelle est ensuite coulée dans un moule préchauffé à 150°C dans le but de préparer des plaques de dimensions 140 × 100 × 4 mm qui vont subir le cycle de cuisson suivant :

- 1 heure 40 minutes de 150°C à 250°C,
- 16 heures à 250°C,
- et 2 heures entre 250°C et 25°C.

Après démoulage, les plaques à base de polymère durci sont découpées pour obtenir des éprouvettes :

- de dimensions 30 × 7 × 4 mm sur lesquelles on mesure les valeurs de Rf et Mf comme indiqué ci-avant à l'exemple 1 ;
- de dimensions 60 × 10 × 4 mm sur lesquelles sont réalisés à 25°C des essais de choc CHARPY non entaillé pour mesurer la résilience (Rc) (selon la norme NF T 51035).

Les valeurs des propriétés mécaniques sont les suivantes :

— Résultats en flexion :

- à 25°C : Rf initiale = 100 MPa
  Mf initial = 1830 MPa

- à 250°C : Rf initiale = 52 MPa
  Mf initial = 1500 MPa

— Résilience :

- à 25°C : Rc = 10,3 Kj/m²

2. Description du procédé de préparation du bis-maléimide à groupement diorganopolysiloxane utilisé dans l'exemple 3 :

Ce bis-maléimide présente la formule suivante :

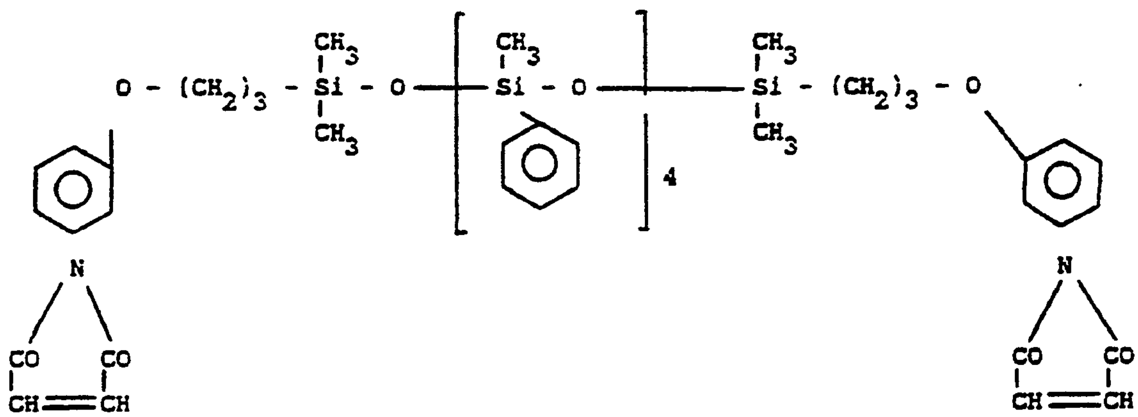

Dans un réacteur en verre muni d'une agitation centrale, et d'un réfrigérant ascendant dans lequel on établit une légère surpression d'azote sec et qui est placé dans un bain d'huile préchauffé à 55°C, on introduit simultanément, en 10 minutes, à l'aide de 2 ampoules de coulée :

— 20 cm³ d'une solution dans l'acétone de 25 g (0,025 mole et 0,02 fonction $NH_2$) de la diamine siloxane préparée ci-avant au paragraphe 2 de l'exemple 1,

— 15 cm³ d'une solution dans l'acétone de 6,4 g (0,055 mole) d'anhydride maléique.

Lorsque les coulées sont terminées, chaque ampoule est rincée par 5 cm³ d'acétone, qui sont ensuite rajoutés à la masse réactionnelle maintenue sous agitation pendant 15 minutes.

Dans l'ampoule de coulée ayant contenu l'anhydride maléique, on charge 6,1 g (0,06 mole) d'anhydride acétique et, dans l'autre ampoule, on charge 1,67 g (0,0165 mole) de triéthylamine.

Ces deux composés sont alors coulés dans le réacteur, puis on ajoute 0,3 cm³ d'une solution aqueuse contenant 0,0528 mole d'acétate de nickel pour 100 cm³ de solution.

Le mélange réactionnel est maintenu à reflux sous agitation pendant 2 heures 30 minutes. La température est ensuite abaissée à 20°C.

Le mélange réactionnel est dilué avec 80 cm³ d'eau glacée (5°C) sous forte agitation et on extrait ensuite avec 80 cm³ d'acétate d'éthyle le produit huileux présent. La phase organique obtenue est lavée avec trois fois 80 cm³ d'eau pour arriver à PH6 dans les eaux de lavage, puis séchée pendant 2 heures sur sulfate de sodium anhydre. Après filtration, on élimine par évaporation l'acétate d'éthyle de la phase organique en terminant cette opération sous pression réduite (70 Pa environ) à 60°C et on recueille 27,3 g (soit un rendement en poids de 96% par rapport à la théorie) d'un produit visqueux, brun-orangé, dont le spectre RMN est en accord avec la structure du bis-maléimide souhaité qui a été définie ci-avant. La masse moléculaire est de l'ordre de 1136 g. En RMN du proton (solvant : $CDCL_6$ ; référence : tétraméthylsilane), on note l'absence de la diamine de départ et on note les déplacements chimiques suivants exprimés en ppm :

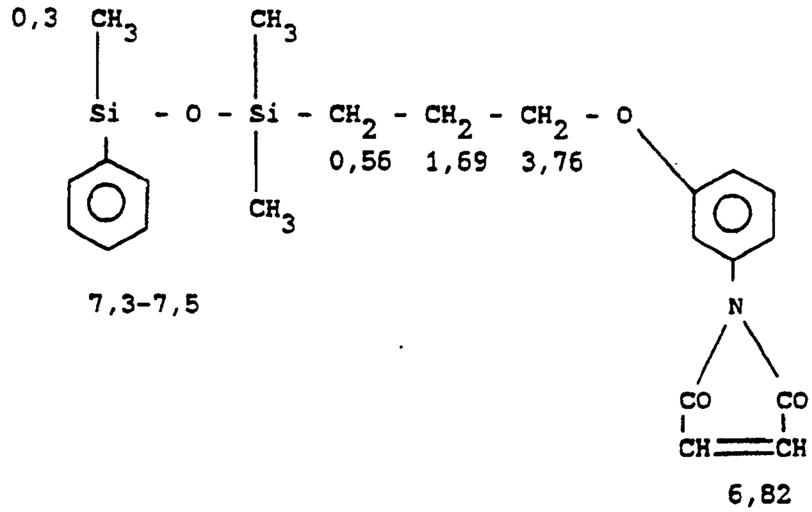

Le rapport : $\dfrac{\text{nombre de liaisons Si-phényle}}{\text{nombre de liaisons Si-méthyle}}$

est trouvé égal à 0,5.

En spectrométrie infra-rouge, on note la présence des bandes suivantes : ν (C = O imide) = 1710-1730 $cm^{-1}$ ; ν (C-N-C maléimide) = 1160 $cm^{-1}$ ; ν (C-N-C) = 1400 $cm^{-1}$.

EXEMPLE 4

Autre exemple de mise en oeuvre de l'invention.

Dans le réacteur utilisé à l'exemple 1, préchauffé à 160°C, on introduit le mélange constitué :

— de 20 g (0,087 mole) de N-(allyloxy-3 phényl)maléimide,

— de 12 g (0,0106 mole) du bis-maléimide à groupement diorganopolysiloxane qui est décrit dans le paragraphe 2 de l'exemple 3,

— et de 0,1 g d'imidazole (il est à l'état dissout dans le mélange). Cette introduction se fait en 2 minutes sous agitation lente.

Après avoir sorti le réacteur du bain d'huile servant d'élément de chauffage, on additionne alors en 4 minutes 6 g (0,006 mole) de la diamine à groupement diorganopolysiloxane qui est décrite ci-avant dans le paragraphe 2 de l'exemple 1. Le réacteur est replongé dans le bain d'huile thermostaté à 160°C et on ajoute en 4 minutes, sous agitation, 62 g (0,173 mole) de N,N'-4,4'-diphénylméthane-bis-maléimide. On laisse réagir 9 minutes supplémentaires sous agitation (le milieu devient homogène au bout de 5 minutes) et on applique une pression réduite de $10.10^2$ Pa durant 2 minutes.

La masse réactionnelle est ensuite moulée, durcie et testée comme indiqué ci-avant dans l'exemple 3.

Les valeurs des propriétés mécaniques sont les suivantes :

— Résultats en flexion :

- à 25°C :
  - Rf initiale = 100 MPa
  - Rf après 1000 heures à 250°C = 83 MPa
  - Mf initial = 2120 MPa
  - Mf après 1000 heures à 250°C = 2600 MPa
- à 250°C :
  - Rf initiale = 58 MPa
  - Rf après 1000 heures à 250°C = 35 MPa
  - Mf initial = 1700 MPa
  - Mf après 1000 heures à 250°C = 1900 MPa

— Résilience :

• à 25°C : Rc = 13,1 kJ/m²

— Résultats en DMA :

• Tg = 280°C.

• on note encore une excellente conservation du module en fonction de la température jusqu'à 350°C (50% de rétention).

**Revendications**

**Revendications pour les Etats Contractants suivants : AT, BE, CH, LI, DE, FR, GB, IT, LU, NL, SE**

1. Polymères à groupements imides caractérisés en ce qu'ils comprennent le produit de réaction, à une température allant de 50° à 300°C, entre :

— (a) un N,N'-bis-maléimide ou une association de plusieurs bis-maléimides de formule :

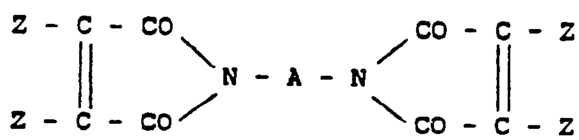

(I)

dans laquelle :

• les symboles Z, identiques ou différents, représentent chacun H, $CH_3$ ou Cl ;

• le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

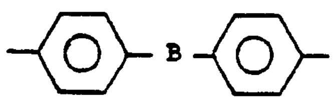

dans laquelle B représente un lien valentiel simple ou un groupement :

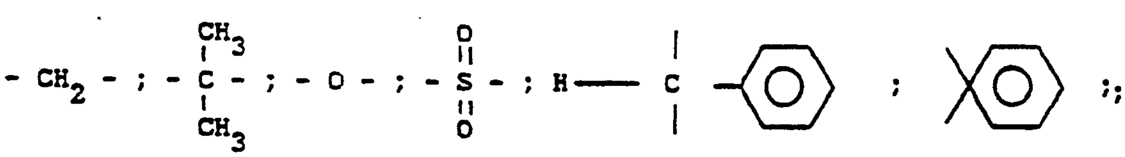

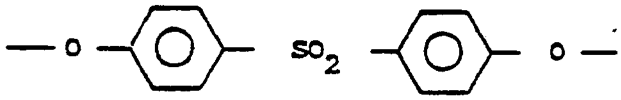

— (b) une diamine à groupement diorganopolysiloxane répondant essentiellement à la formule suivante :

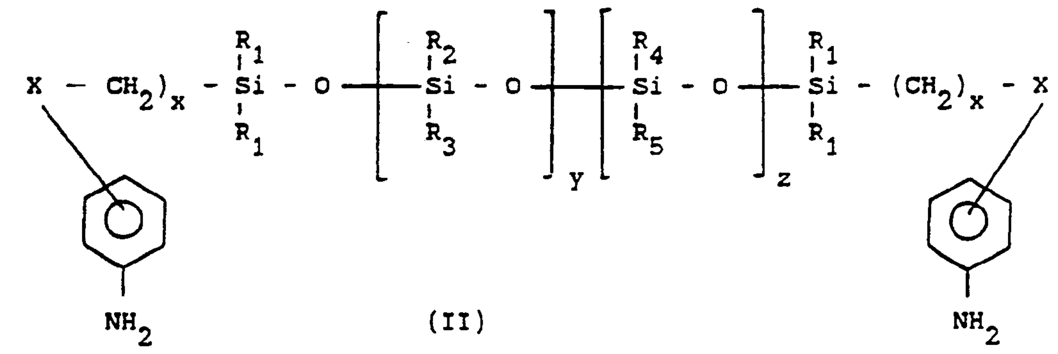

(II)

dans laquelle :

• X, qui est en position ortho, méta ou para par rapport à l'atome de carbone du cycle benzénique relié à l'azote, représente un atome ou groupement suivant :

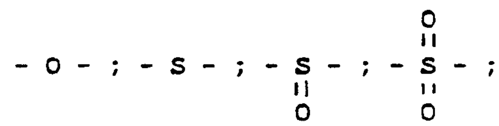

• $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement — CN ; un radical phényle éventuellement substitué par un ou plusieurs radicaux alkyles et/ou alkoxy ayant de 1 à 4 atomes de carbone ou par un ou plusieurs atomes de chlore ;

• le symbole x est un nombre entier situé dans l'intervalle allant de 2 à 8.

• les symboles y et z représentent des nombres, identiques ou différents, entiers ou fractionnaires, dont la somme se situe dans l'intervalle allant de 0 à 100 ;

— (c) éventuellement un N,N'-bis-maléimide à groupement diorganopolysiloxane répondant essentiellement à la formule générale :

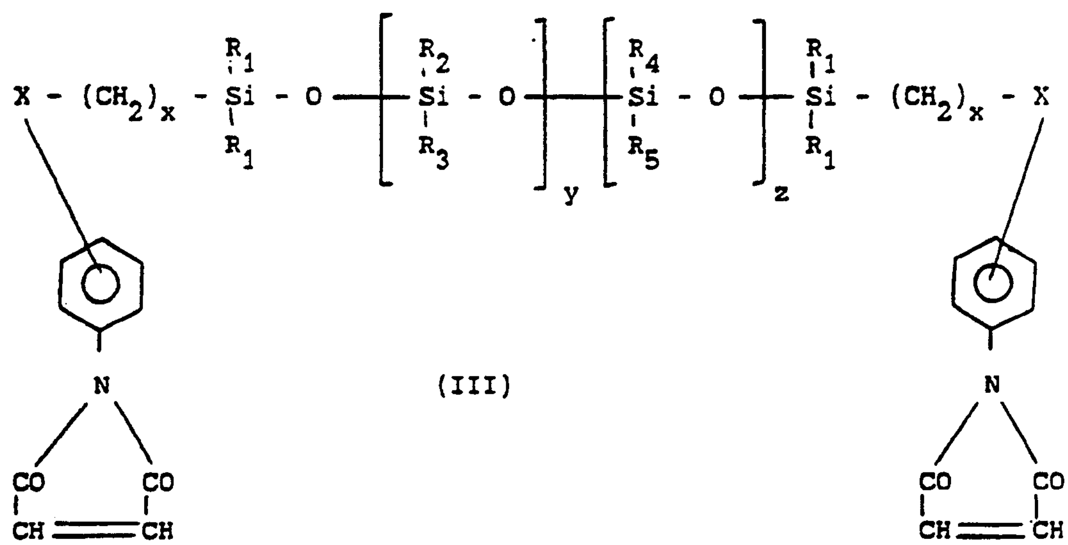

(III)

dans laquelle X, $R_1$, $R_2$, $R_3$, $R_4$, $R_5$, x, y et z ont les significations données ci-avant pour la formule (II) ;

— (d) éventuellement un ou plusieurs monomères autres qu'un bis-maléimide de formule (I) ou de formule (III) et comportant une ou plusieurs doubles liaisons carbone-carbone polymérisables ;

— et (e) éventuellement un catalyseur.

2. Polymères selon la revendication 1, caractérisé en ce que le réactif facultatif (d), quand on en utilise un,

consiste dans les espèces suivantes :

($d_1$) soit un ou plusieurs monomères de formule :

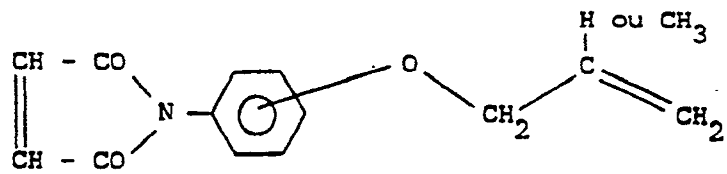

(IV)

dans laquelle le radical allyloxy ou méthallyloxy est en position ortho, métha ou para par rapport à l'atome de carbone du cycle benzénique relié à l'azote ;

($d_2$) soit un composé comprenant :

— un mélange d'un monomère de formule :

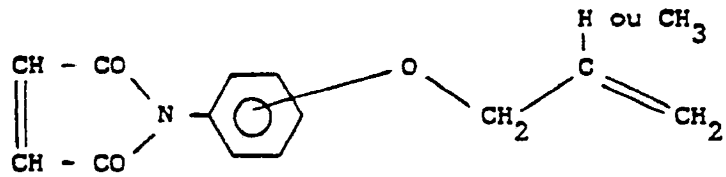

(IV)

dans laquelle le radical allyloxy ou méthallyloxy est en position ortho, méta ou para par rapport à l'atome de carbone du cycle benzénique relié à l'azote.

— avec :

• au moins un dérivé monosubstitué de formule :

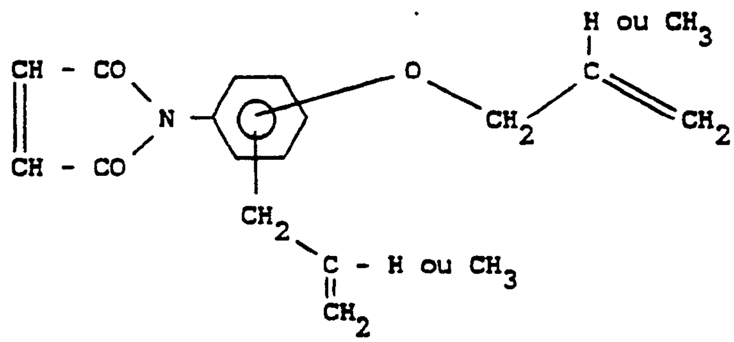

(V)

• et éventuellement un ou plusieurs dérivés disubstitués de formule :

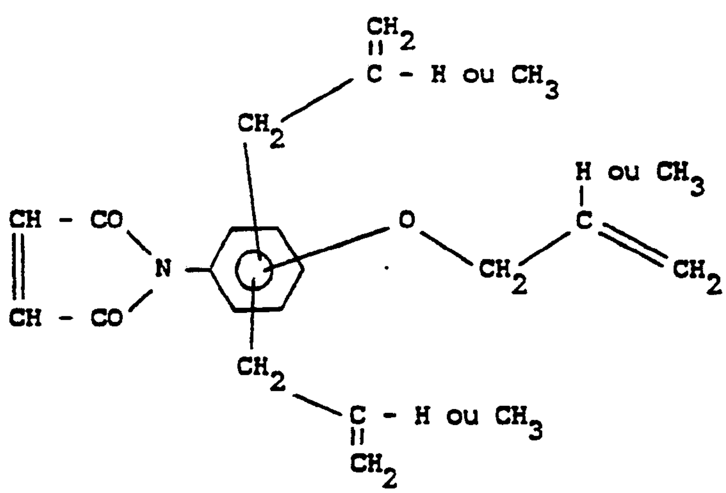

(VI)

($d_3$) soit un ou plusieurs hétérocycles substitués comportant une ou plusieurs doubles liaisons carbone-carbone.

3. Polymères selon l'une quelconque des revendications 1 à 2, caractérisés en ce que le catalyseur (e), quand on en utilise un, est soit ($e_1$) un initiateur de polymérisation radicalaire, soit ($e_2$) un composé imidazole de formule :

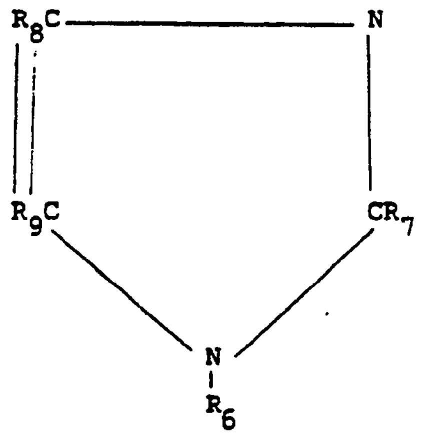

(VII)

dans laquelle $R_6$, $R_7$, $R_8$ et $R_9$, identiques ou différents, représentent chacun : un atome d'hydrogène, un radical alkyle ou alcoxy ayant de 1 à 20 atomes de carbone, vinyle, phényle, nitro, $R_8$ pouvant former avec $R_9$ et les atomes de carbone auxquels sont liés ces radicaux un cycle unique comme par exemple un cycle benzénique, $R_6$ pouvant également représenter un groupement carbonyle lié à un deuxième cycle imidazole.

4. Polymères selon l'une quelconque des revendications 1 à 3, caractérisés en ce que l'on choisit les quantités de réactifs (a) et (b) de manière à avoir, en poids par rapport au poids total de ces constituants :

— de 50 à 98% et, de préférence, de 90 à 95% du bis-maléimide(s) (a) de formule (I),

— de 2 à 50% et, de préférence, de 5 à 30% de diamine siloxane (b) de formule (II).

5. Polymères selon l'une quelconque des revendications 1 à 4, caractérisés en ce que la quantité du bis-maléimide siloxane facultatif (c) de formule (III), quand on en utilise un, représente moins de 40% et, de préférence, de 5% à 30% du poids total des réactifs (a) + (b).

6. Polymères selon l'une quelconque des revendications 1 à 5, caractérisés en ce que la quantité du réactif facultatif (d), quand on en utilise un, représente moins de 60% et, de préférence, de 5% à 50% du poids total des réactifs (a) + (b).

7. Polymères selon l'une quelconque des revendications 1 à 6, caractérisés en ce que le catalyseur facultatif (e), quand on en utilise un, est employé à un taux se situant dans l'intervalle allant de 0,01 à 1% et, de préférence, de 0,05 à 0,5% en poids par rapport à l'ensemble des réactifs (a) + (b) + éventuellement (c) et/ou (d).

8. Polymères selon l'une quelconque des revendications 1 à 7 caractérisés en ce qu'ils se trouvent sous forme de polymères durcis, insolubles dans les solvants usuels et ne présentant pas de ramollissement notable au dessous de la température à laquelle ils commencent à se dégrader.

9. Polymères selon l'une quelconque des revendications 1 à 7 caractérisés en ce qu'ils se trouvent sous forme de prépolymères thermodurcissables (P) solubles dans les solvants organiques polaires et présentent un point de ramollissement à une température inférieure à 200°C.

10. Procédé de préparation de polymères durcis selon les revendications 1 à 8 caractérisé en ce que l'on chauffe directement le mélange des réactifs à une température comprise entre 50°C et 300°C en opérant en masse ou au sein d'un diluant organique.

11. Procédé de préparation selon la revendication 10, caractérisé en ce qu'il consiste à chauffer le mélange des réactifs entre 50 et 180° C pour former dans un premier temps un prépolymère (P), puis provoquer le durcissement du prépolymère (P) par chauffage à une température comprise entre 150°C et 250°C.

12. Procédé de préparation de polymères thermodurcissables (P) selon les revendications 1 à 7 et 9, caractérisé en ce que l'on chauffe directement le mélange des réactifs à une température comprise entre 50°C et 180°C en opérant en masse ou au sein d'un diluant organique.

13. Procédé de préparation selon l'une quelconque des revendications 10 à 12, caractérisé en ce que, lorsque l'on opère en masse, on utilise :

— comme diamines siloxanes (b) de formule (II),

— et éventuellement comme bis-maléimides siloxanes (c) de formule (III), des composés dans lesquels

le rapport :

$$\frac{\text{nombre de liaisons Si-phényle (éventuellement substitué)}}{\text{nombre de liaisons Si-alkyle}}$$

est au moins égal à 0,25.

14. Application des prépolymères selon l'une quelconque des revendications 1 à 9 à la fabrication d'objets moulés, de revêtements, d'articles à structure cellulaire et de matériaux composites renforcés et imprégnés.

**Revendications pour l'Etat contractant suivant : ES**

1. Procédé de préparation de polymères à groupements imides se trouvant sous forme de polymères durcis, insolubles dans les solvants usuels et ne présentant pas de ramollissement notable au-dessous de la température à laquelle ils commencent à se dégrader, caractérisé par le fait que l'on chauffe directement, à une température allant de 50° à 300°C, le mélange des réactifs suivants :

— (a) un N,N'-bis-maléimide ou une association de plusieurs bis-maléimides de formule :

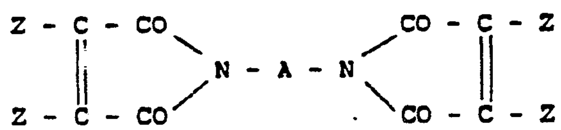 (I)

dans laquelle :

- les symboles Z, identiques ou différents, représentent chacun H, $CH_3$ ou Cl ;
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

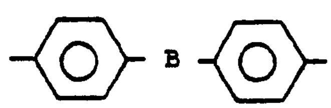

dans laquelle B représente un lien valentiel simple ou un groupement :

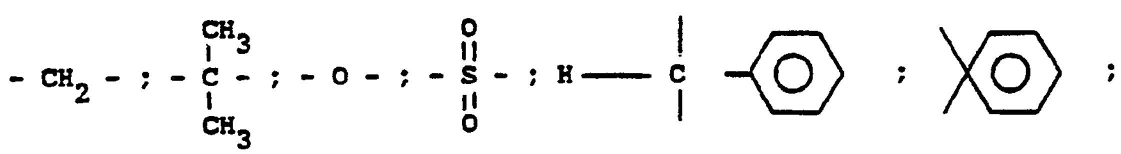

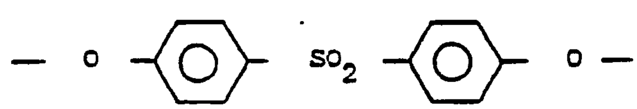

— (b) une diamine à groupement diorganopolysiloxane répondant essentiellement à la formule suivante :

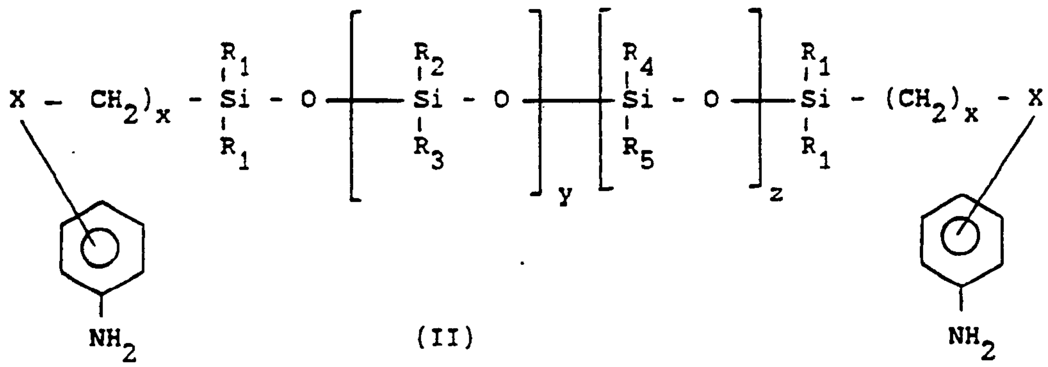

(II)

dans laquelle :

- X, qui est en position ortho, méta ou para par rapport à l'atome de carbone du cycle benzénique relié à l'azote, représente un atome ou groupement suivant :

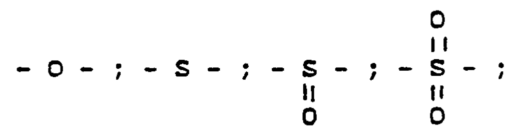

- $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement — CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8.
- les symboles y et z représentent des nombres, identiques ou différents, entiers ou fractionnaires, dont la somme se situe dans l'intervalle allant de 0 à 100 ;

— (c) éventuellement un N,N'-bis-maléimide à groupement diorganopolysiloxane répondant essentiellement à la formule générale :

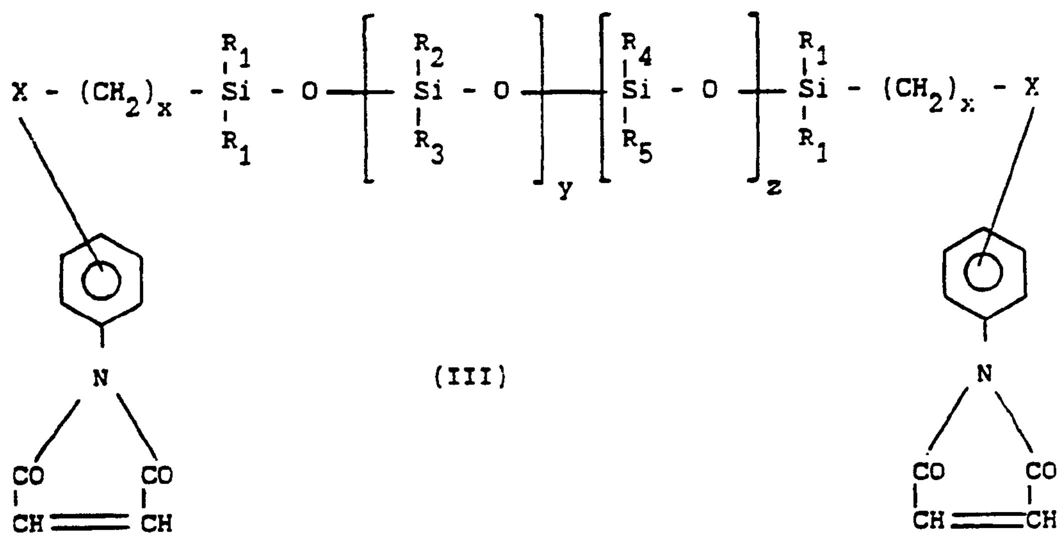

(III)

dans laquelle X, $R_1$, $R_2$, $R_3$, $R_4$, $R_5$, x, y et z ont les significations données ci-avant pour la formule (II) ;

— (d) éventuellement un ou plusieurs monomères autres qu'un bis-maléimide de formule (I) ou de formule (III) et comportant une ou plusieurs doubles liaisons carbone-carbone polymérisables ;

— et (e) éventuellement un catalyseur

ce procédé étant conduit en opérant en masse ou au sein d'un diluant organique.

2. Procédé de préparation de polymères à groupements imides se trouvant sous forme de prépolymères

thermodurcissables (P) solubles dans les solvants organiques polaires et présentant un point de ramollissement à une température inférieur à 200°C, caractérisé par le fait que l'on chauffe directement le mélange des réactifs (a), (b), éventuellement (c), éventuellement (d) et éventuellement (e) définis ci-avant dans la revendication 1 à une température comprise entre 50°C et 180°C en opérant en masse ou au sein d'un diluant organique.

3. Procédé selon la revendication 1, caractérisé en ce qu'il consiste à chauffer le mélange des réactifs entre 50°C et 180°C pour former dans un premier temps un prépolymère (P), puis provoquer le durcissement du prépolymère (P) par chauffage à une température comprise entre 150°C et 250°C.

4. Procédé selon l'une quelconque des revendications 1 à 3, caractérisé en ce que le réactif facultatif (d), quand on en utilise un, consiste dans les espèces suivantes :

($d_1$) soit un ou plusieurs monomères de formule :

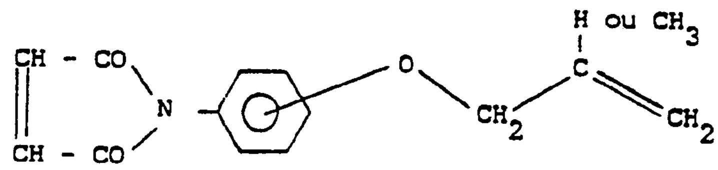

(IV)

dans laquelle le radical allyloxy ou méthallyloxy est en position ortho, métha ou para par rapport à l'atome de carbone du cycle benzénique relié à l'azote ;

($d_2$) soit un composé comprenant :

— un mélange d'un monomère de formule :

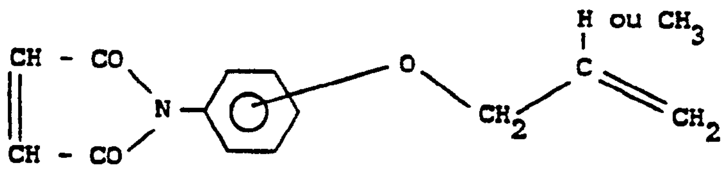

(IV)

dans laquelle le radical allyloxy ou méthallyloxy est en position ortho, méta ou para par rapport à l'atome de carbone du cycle benzénique relié à l'azote.

— avec :

• au moins un dérivé monosubstitué de formule :

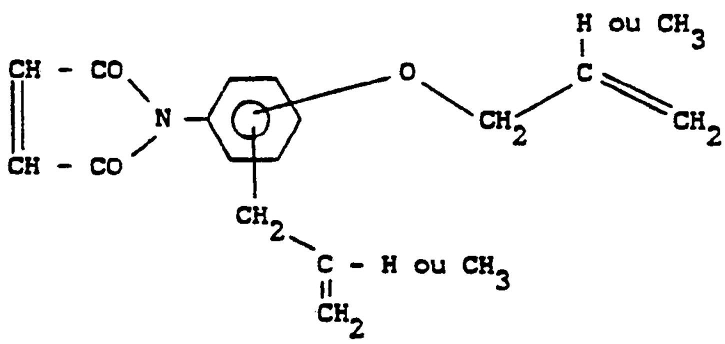

(V)

• et éventuellement un ou plusieurs dérivés disubstitués de formule :

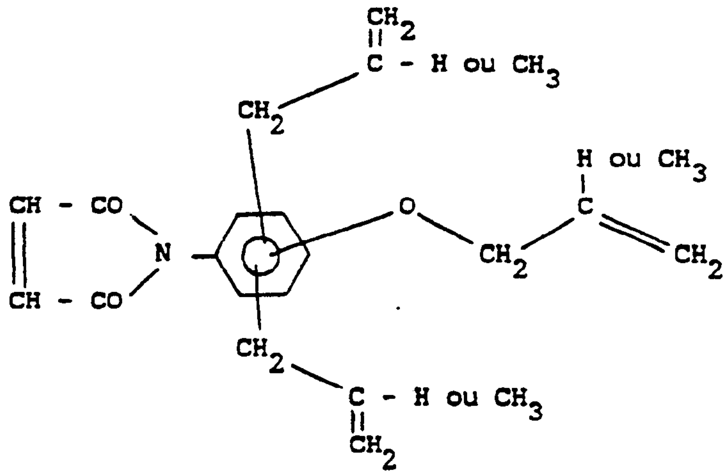

(VI)

($d_3$) soit un ou plusieurs hétérocycles substitués comportant une ou plusieurs doubles liaisons carbone-carbone.

5. Procédé selon l'une quelconque des revendications 1 à 4, caractérisé en ce que le catalyseur (e), quand on en utilise un, est soit ($e_1$) un initiateur de polymérisation radicalaire, soit ($e_2$) un composé imidazole de formule :

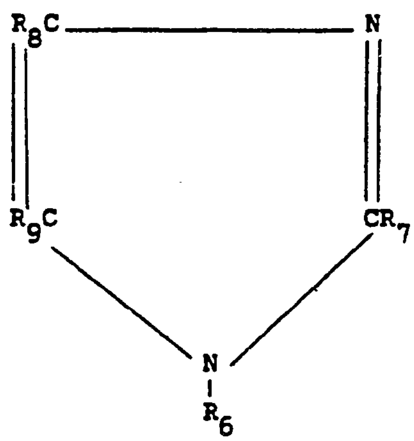

(VII)

dans laquelle $R_6$, $R_7$, $R_8$ et $R_9$, identiques ou différents, représentent chacun : un atome d'hydrogène, un radical alkyle ou alcoxy ayant de 1 à 20 atomes de carbone, vinyle, phényle, nitro, $R_8$ pouvant former avec $R_9$ et les atomes de carbone auxquels sont liés ces radicaux un cycle unique comme par exemple un cycle benzénique, $R_6$ pouvant également représenter un groupement carbonyle lié à un deuxième cycle imidazole.

6. Procédé selon l'une quelconque des revendications 1 à 5, caractérisés en ce que l'on choisit les quantités de réactifs (a) et (b) de manière à avoir, en poids par rapport au poids total de ces constituants :

— de 50 à 98% et, de préférence, de 90 à 95% du bis-maléimide(s) (a) de formule (I),

— de 2 à 50% et, de préférence, de 5 à 30% de diamine siloxane (b) de formule (II).

7. Procédé selon l'une quelconque des revendications 1 à 6, caractérisés en ce que la quantité du bis-maléimide siloxane facultatif (c) de formule (III), quand on en utilise un, représente moins de 40% et, de préférence, de 5% à 30% du poids total des réactifs (a) + (b).

8. Procédé selon l'une quelconque des revendications 1 à 7, caractérisés en ce que la quantité du réactif facultatif (d), quand on en utilise un, représente moins de 60% et, de préférence, de 5% à 50% du poids total des réactifs (a) + (b).

9. Procédé selon l'une quelconque des revendications 1 à 8, caractérisés en ce que le catalyseur facultatif (e), quand on en utilise un, est employé à un taux se situant dans l'intervalle allant de 0,01 à 1% et, de préférence, de 0,05 à 0,5% en poids par rapport à l'ensemble des réactifs (a) + (b) + éventuellement (c) et/ou (d).

10. Procédé selon l'une quelconque des revendications 1 à 9, caractérisé en ce que, lorsque l'on opère en masse, on utilise :

— comme diamines siloxanes (b) de formule (II),
— et éventuellement comme bis-maléimides siloxanes (c) de formule (III), des composés dans lesquels le rapport :

$$\frac{\text{nombre de liaisons Si-phényle (éventuellement substitué)}}{\text{nombre de liaisons Si-alkyle}}$$

est au moins égal à 0,25.

11. Application des polymères préparés selon l'une quelconque des revendications 1 à 10 à la fabrication d'objets moulés, de revêtements, d'articles à structure cellulaire et de matériaux composites renforcés et imprégnés.

## Patentansprüche

## Patentansprüche für folgende Vertragsstaaten : AT, BE, CH, DE, SE, FR, GB, IT, LI, LU, NL

1. Polymere mit Imidgruppen, dadurch gekennzeichnet, daß sie das Produkt der Reaktion bei einer Temperatur von 50 bis 300°C enthalten zwischen

(a) einem N,N'-Bismaleimid oder einer Assoziation mehrerer Bismaleimide der formel

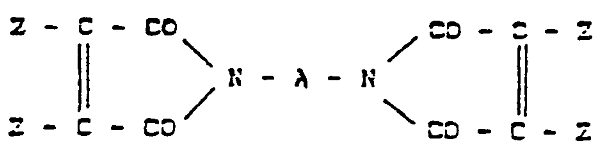
(I)

worin

- die Symbole Z, die gleich oder verschieden sind, jeweils H, $CH_3$ oder Cl bedeuten ;
- das Symbol A für einen zweiwertigen Rest steht, ausgewählt unter den Resten : Cyclohexylen ; Phenylen ; 4-Methyl-1,3-phenylen ; 2-Methyl-1,3-phenylen ; 5-Methyl-1,3-phenylen ; 2,5-Diethyl-3-methyl-1,4-phenylen ; und den Resten der Formel

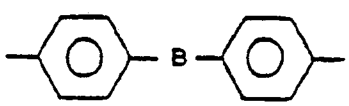

worin B für eine einfache Valenzbindung oder eine Gruppe

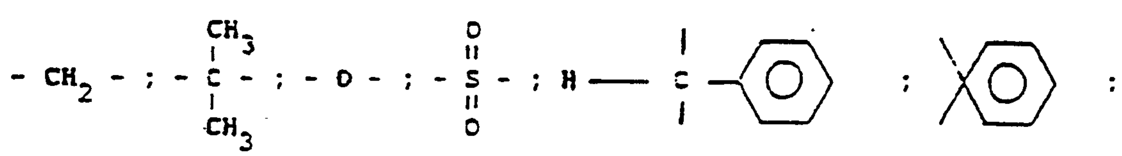

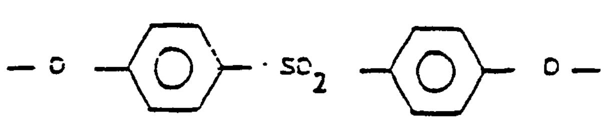

steht ;

(b) einem Diamin mit einer Diorganopolysiloxan-Gruppe, im wesentlichen entsprechend der folgenden For-

mel

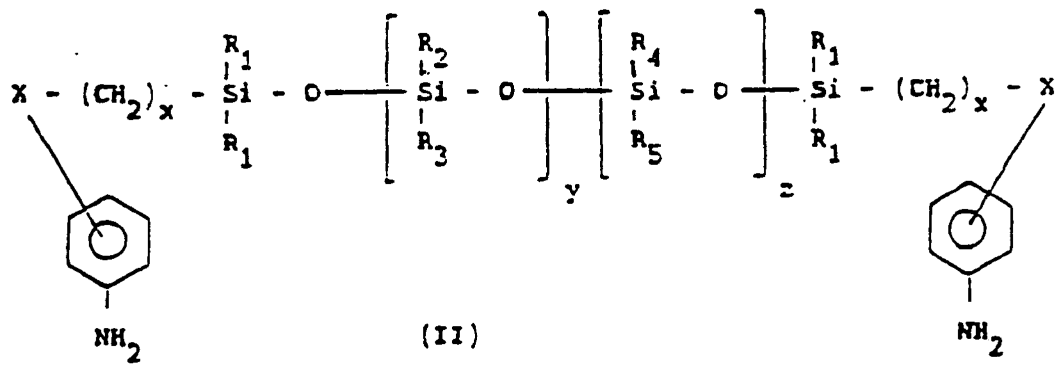

(II)

worin

- X, das sich in ortho-, meta- oder para-Stellung in Bezug auf das Kohlenstoffatom des Benzolrings, das an den Stickstoff gebunden ist, befindet, für das folgende Atom oder die folgende Gruppe steht

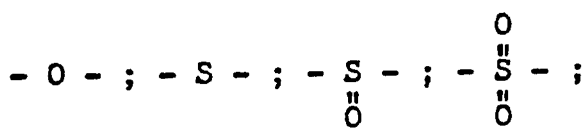

- $R_1$, $R_2$, $R_3$, $R_4$ und $R_5$, die gleich oder verschieden sind, jeweils einen einwertigen Kohlenwasserstoffrest darstellen, ausgewählt unter : den linearen oder verzweigten Alkylresten mit 1 bis 12 Kohlenstoffatomen, wobei diese Reste durch ein oder mehrere Chlor-, Brom- oder Fluoratome oder eine Gruppe —CN substituiert sein können ; einem Phenylrest, der gegebenenfalls substituiert ist durch einen oder mehrere Alkyl- und/oder Alkoxyreste mit 1 bis 4 Kohlenstoffatomen oder durch ein oder mehrere Chloratome ;
- das Symbol x eine ganze Zahl bedeutet, die im Bereich von 2 bis 8 liegt ;
- die Symbole y und z gleiche oder verschiedene, ganze oder Bruchzahlen bedeuten, deren Summe im Bereich von 0 bis 100 liegt ;

(c) gegebenenfalls einem N,N'-Bismaleimid mit einer Diorganopolysiloxan-Gruppe, im wesentlichen entsprechend der allgemeinen Formel

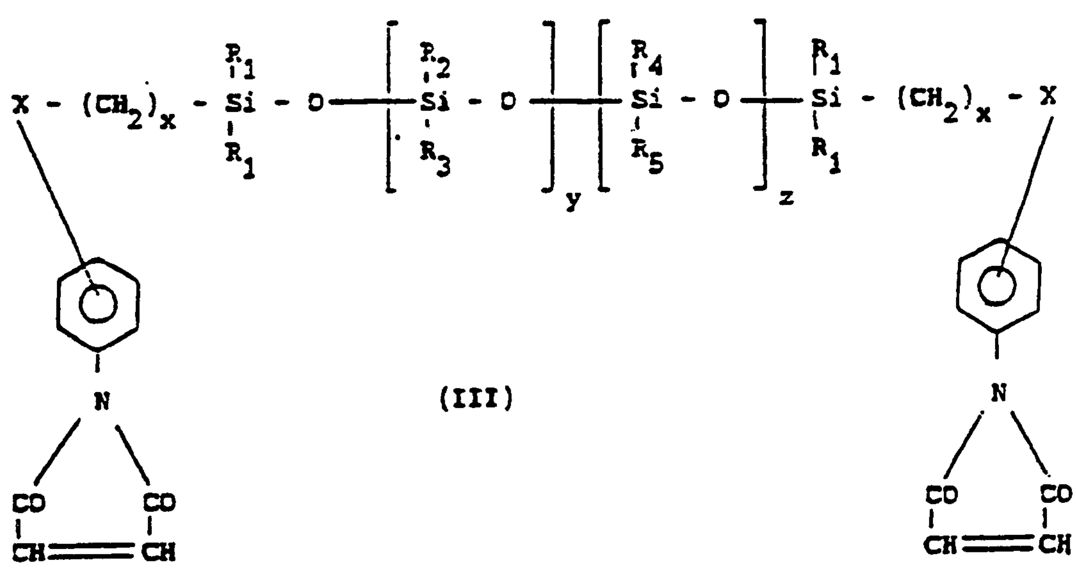

(III)

worin X, $R_1$, $R_2$, $R_3$, $R_4$, $R_5$, x, y und z die vorstehend für die Formel (II) angegebenen Bedeutungen besitzen;
(d) gegebenenfalls einem oder mehreren Monomeren, die von dem Bismaleimid der Formel (I) oder der

Formel (III) verschieden sind und eine oder mehrere polymerisierbare Kohlenstoff-Kohlenstoff-Doppelbindungen enthalten ; und

(e) gegebenenfalls einem Katalysator.

2. Polymere gemäß Anspruch 1, dadurch gekennzeichnet, daß das fakultative Reagens (d), wenn man hiervon eines verwendet, aus den folgenden Arten besteht :

($d_1$) entweder ein oder mehrere Monomere der Formel

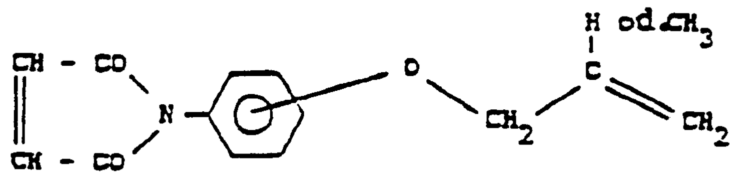

(IV)

worin der Allyloxy- oder Methallyloxyrest sich in ortho-, meta- oder para-Stellung in Bezug auf das Kohlenstoffatom des Benzolrings, welches an den Stickstoff gebunden ist, befindet ;

($d_2$) oder eine Verbindung, umfassend

— ein Gemisch eines Monomeren der Formel

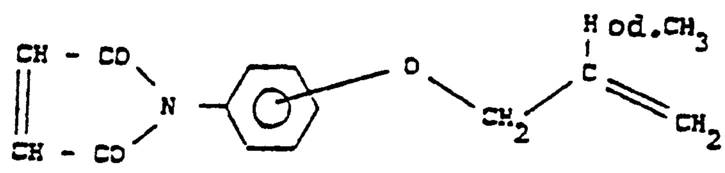

(IV)

worin sich der Allyloxy- oder Methallyloxyrest in ortho-, meta- oder para-Stellung in bezug auf das an das Stickstoffatom,gebundene Kohlenstoffatom des Benzolrings befindet,

— mit zumindest einem monosubstituierten Derivat der Formel

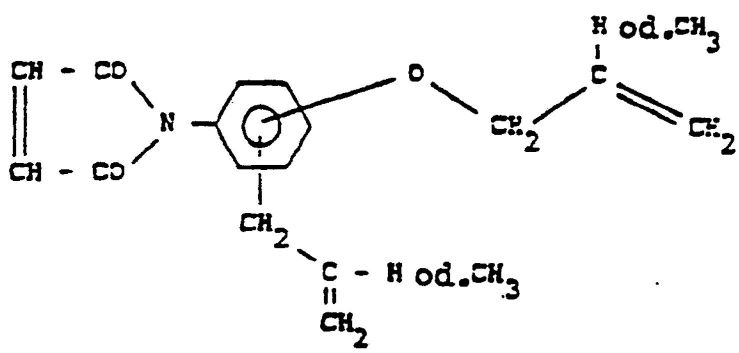

(V)

und gegebenenfalls einem oder mehreren disubstituierten Derivaten der Formel

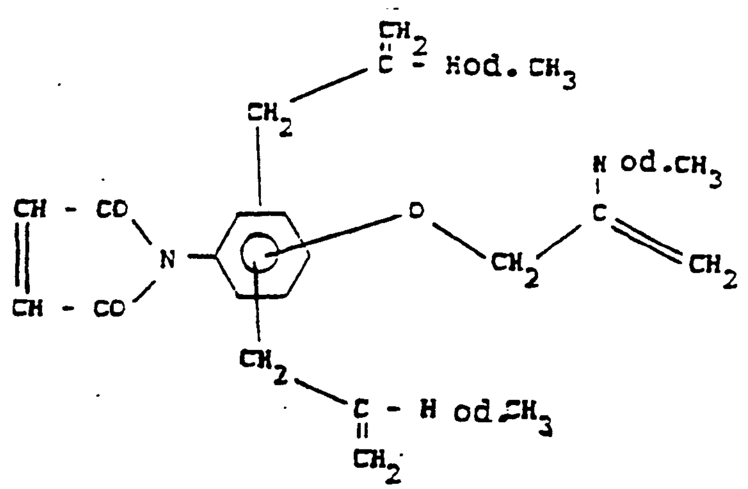

(VI)

($d_3$) oder ein oder mehrere substituierte Heterocyclen, die eine oder mehrere Kohlenstoff-Kohlenstoff-Doppelbindungen enthalten.

3. Polymere gemäß einem der Ansprüche 1 bis 2, dadurch gekennzeichnet, daß der Katalysator (e), wenn man hiervon einen verwendet, entweder ($e_1$) ein radikalischer Polymerisationsinitiator oder ($e_2$) eine Imidazolverbindung der Formel

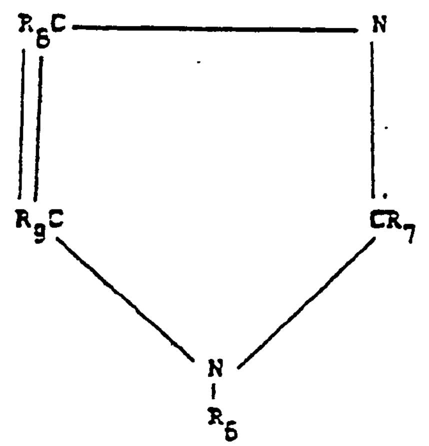

(VII)

ist, worin $R_6$, $R_7$, $R_8$ und $R_9$, die gleich oder verschieden sind, jeweils bedeuten : ein Wasserstoffatom, einen Alkyl- oder Alkoxyrest mit 1 bis 20 Kohlenstoffatomen, Vinyl, Phenyl, Nitro, wobei $R_8$ mit $R_9$ und den Kohlenstoffatomen, an die diese Reste gebunden sind, einen einzigen Ring, wie z.B. einen Benzolring, bilden können, und wobei $R_6$ auch eine an einen zweiten Imidazolring gebundene Carbonylgruppe darstellen kann.

4. Polymere gemäß einem der Ansprüche 1 bis 3, dadurch gekennzeichnet, daß man die Mengen der Reaktanten (a) und (b) derart wählt, daß man in Gewicht, bezogen auf das Gesamtgewicht dieser Bestandteile, erhält :

— 50 bis 98% und vorzugsweise 90 bis 95% an Bismaleimid(en) (a) der Formel (I),

— 2 bis 50% und vorzugsweise 5 bis 30% Siloxandiamin (b) der Formel (II).

5. Polymere gemäß einem der Ansprüche 1 bis 4, dadurch gekennzeichnet, daß die Menge des fakultativen Siloxan-bismaleimids (c) der Formel (III), wenn man hiervon eines verwendet, weniger als 40% und vorzugsweise 5 bis 30% des Gesamtgewichts der Reaktanten (a) + (b) beträgt.

6. Polymere gemäß einem der Ansprüche 1 bis 5, dadurch gekennzeichnet, daß die Menge des fakultativen Reagens (d), wenn man hiervon eines verwendet, weniger als 60% und vorzugsweise 5 bis 50% des Gesamtgewichts der Reaktanten (a) + (b) beträgt.

7. Polymere gemäß einem der Ansprüche 1 bis 6, dadurch gekennzeichnet, daß der fakultative Katalysator (e), wenn man hiervon einen verwendet, mit einem Gehalt verwendet wird, der im Bereich von 0,01 bis 1% und vorzugsweise 0,05 bis 0,5 Gew.% bezogen auf die Gesamtheit der Reaktanten (a) +(b) + gegebenenfalls (c) und/oder (d), liegt.

8. Polymere gemäß einem der Ansprüche 1 bis 7, dadurch gekennzeichnet, daß sie in Form von gehärteten

Polymeren, die in üblichen Lösungsmittel unlöslich sind, vorliegen und keine merkliche Erweichung unterhalb der Temperatur aufweisen, bei der sie sich zersetzen beginnen.

9. Polymere gemäß einem der Ansprüche 1 bis 7, dadurch gekennzeichnet, daß sie in Form von wärmehärtbaren Präpolymeren (P), die in polaren, organischen Lösungsmitteln löslich sind, vorliegen und einen Erweichungspunkt bei einer Temperatur von geringer als 200°C besitzen.

10. Verfahren zur Herstellung von gehärteten Polymeren gemäß den Ansprüchen 1 bis 8, dadurch gekennzeichnet, daß man direkt das Gemisch der Reaktanten bei einer Temperatur zwischen 50 und 300°C erhitzt, wobei man in der Masse oder in den Medium eines organischen Verdünnungsmittels arbeitet.

11. Verfahren gemäß Anspruch 10, dadurch gekennzeichnet, daß es darin besteht, daß man das Gemisch der Reaktanten zwischen 50 und 180°C erhitzt, um in einer ersten Stufe ein Präpolymeres (P) zu bilden, hiernach die Härtung des Präpolymeren (P) durch Erhitzen auf eine Temperatur zwischen 150 und 250°C vornimmt.

12. Verfahren zur Herstellung von wärmehärtbaren Polymeren (P) gemäß den Ansprüchen 1 bis 7 und 9, dadurch gekennzeichnet, daß man direkt das Gemisch der Reaktanten bei einer Temperatur zwischen 50 und 180°C erhitzt, wobei man in der Masse oder in dem Medium eines organischen Verdünnungsmittels arbeitet.

13. Verfahren gemäß einem der Ansprüche 10 bis 12,dadurch gekennzeichnet, daß, wenn man in der Masse arbeitet, man verwendet:

— als Siloxandiamine (b) der Formel (II),

— und gegebenenfalls als Siloxan-bismaleimide (c) der Formel (III) Verbindungen, in denen das Verhältnis

$$\frac{\text{Anzahl der Si-phenyl(gegebenenfalls substituiert)-Bindungen}}{\text{Anzahl der Si-alkyl-Bindungen}}$$

zumindest 0,25 beträgt.

14. Verwendung der Präpolymeren gemäß einem der Ansprüche 1 bis 9 zur Herstellung von Formgegenständen, Überzügen, Artikeln mit zellularer Struktur und zusammengesetzten, verstärkten und imprägnierten Materialien.

**Patentansprüche für folgenden Vertragsstaat : ES**

1. Verfahren zur Herstellung von Polymeren mit Imidgruppen, die in Form von gehärteten Polymeren, welche in üblichen Lösungsmitteln unlöslich sind, vorliegen und keine merkliche Erweichung unterhalb der Temperatur, bei der sie sich zu zersetzen beginnen, aufweisen, dadurch gekennzeichnet, daß man direkt auf eine Temperatur von 50 bis 300°C das Gemisch der folgenden Reaktanten erhitzt:

(a) einem N,N'-Bismaleimid oder einer Assoziation mehrerer Bismaleimide der Formel

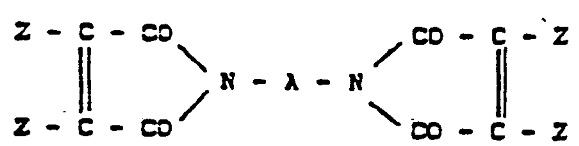

(I)

worin

- die Symbole Z, die gleich oder verschieden sind, jeweils H, $CH_3$ oder Cl bedeuten ;
- das Symbol A für einen zweiwertigen Rest steht, ausgewählt unter den Resten : Cyclohexylen ; Phenylen ; 4-Methyl-1,3-phenylen ; 2-Methyl-1-3-phenylen ; 5-Methyl-1,3-phenylen ; 2,5-Diethyl-3-methyl-1,4-phenylen ; und den Resten der Formel

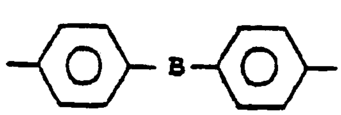

worin B für eine einfache Valenzbindung oder eine Gruppe

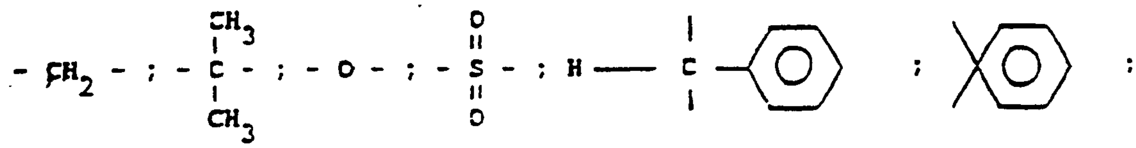

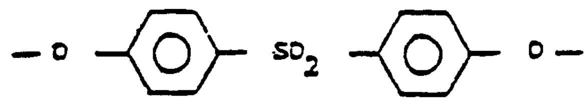

steht ;

(b) einem Diamin mit einer Diorganopolysiloxan-Gruppe, im wesentlichen entsprechend der folgenden Formel

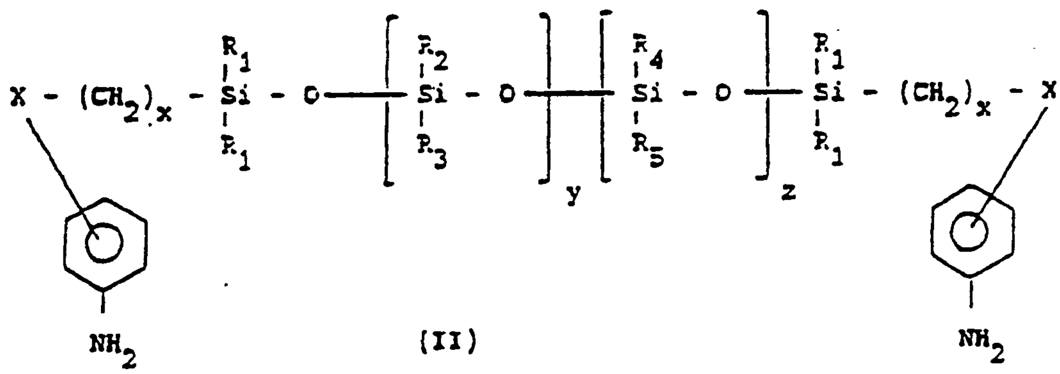

(II)

worin

- X, das sich in ortho-, meta- oder para-Stellung in Bezug auf das Kohlenstoffatom des Benzolrings, das an den Stickstoff gebunden ist, befindet, für das folgende Atom oder die folgende Gruppe steht

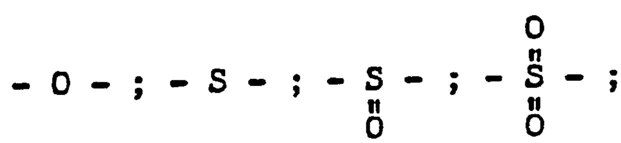

- $R_1$, $R_2$, $R_3$, $R_4$ und $R_5$, die gleich oder verschieden sind, jeweils einen einwertigen Kohlenwasserstoffrest darstellen, ausgewählt unter : den linearen oder verzweigten Alkylresten mit 1 bis 12 Kohlenstoffatomen, wobei diese Reste durch ein oder mehrere Chlor-, Brom- oder Fluoratome oder eine Gruppe —CN substituiert sein können ; einem Phenylrest, der gegebenenfalls substituiert ist durch einen oder mehrere Alkyl- und/oder Alkoxyreste mit 1 bis 4 Kohlenstoffatomen oder durch ein oder mehrere Chloratome ;
- das Symbol x eine ganze Zahl bedeutet, die im Bereich von 2 bis 8 liegt ;
- die Symbole y und z gleiche oder verschiedene, ganze oder Bruchzahlen bedeuten, deren Summe im Bereich von 0 bis 100 liegt ;

(c) gegebenenfalls einem N,N'-Bismaleimid mit einer Diorganopolysiloxan-Gruppe, im wesentlichen entsprechend der allgemeinen Formel

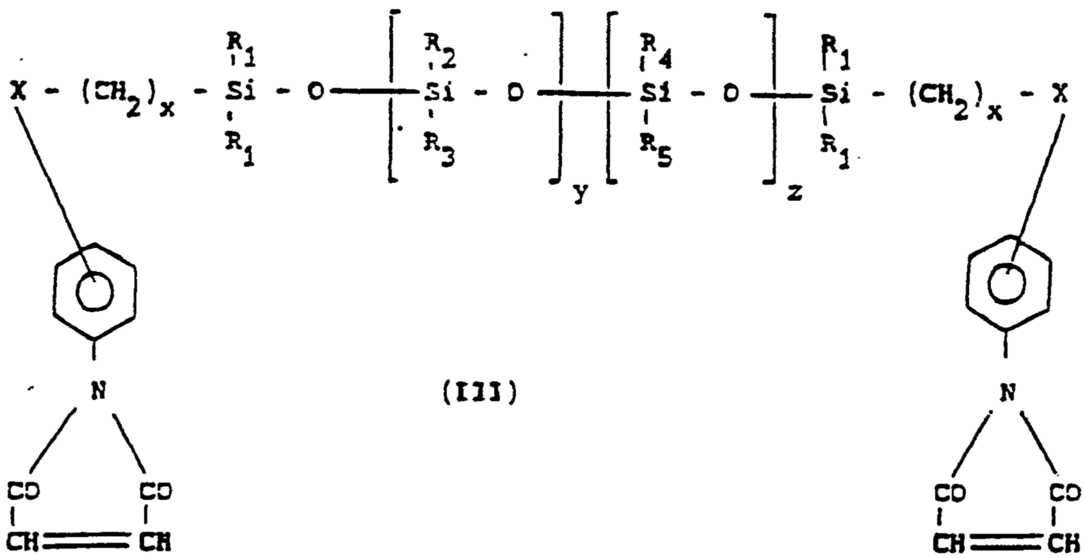

(III)

worin X, $R_1$, $R_2$, $R_3$, $R_4$, $R_5$, x, y und z die vorstehend für die Formel (II) angegebenen Bedeutungen besitzen;
(d) gegebenenfalls einem oder mehreren Monomeren, die von dem Bismaleimid der Formel (I) oder der Formel (III) verschieden sind und eine oder mehrere polymerisierbare Kohlenstoff-Kohlenstoff-Doppelbindungen enthalten ;
(e) gegebenenfalls einem Katalysator ; wobei dieses Verfahren durchgeführt wird, indem man in der Masse oder in dem Medium eines organischen Verdünnungsmittels arbeitet.

2. Verfahren zur Herstellung von Polymeren mit Imidgruppen, die in Form von wärmehärtbaren Präpolymeren (P), welche in polaren, organischen Lösungsmittel löslich sind vorliegen und einen Erweichungspunkt bei einer Temperatur unterhalb 200°C besitzen, dadurch gekennzeichnet, daß man direkt das Gemisch der Reaktanten (a), (b), gegebenenfalls (c), gegebenenfalls (d) und gegebenenfalls (e), wie vorstehend in Anspruch 1 definiert, auf eine Temperatur zwischen 50 und 180°C erhitzt, wobei man in der Masse oder in dem Medium eines organischen Verdünnungsmittels arbeitet.

3. Verfahren gemäß Anspruch 1, dadurch gekennzeichnet, daß es darin besteht, daß man das Gemisch der Reaktanten zwischen 50 und 180°C erhitzt, um in einer ersten Stufe ein Präpolymeres (P) zu bilden, hiernach die Härtung des Präpolymeren (P) durch Erhitzen auf eine Temperatur zwischen 150 und 250°C vornimmt.

4. Verfahren gemäß einem der Ansprüche 1 bis 3, dadurch gekennzeichnet, daß das fakultative Reagens (d), wenn man hiervon eines verwendet, aus den folgenden Arten besteht :
($d_1$) entweder ein oder mehrere Monomere der Formel

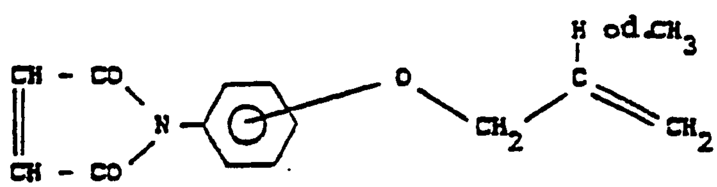

(IV)

worin der Allyloxy- oder Methallyloxyrest sich in ortho-, meta- oder para-Stellung in Bezug auf das Kohlenstoffatom des Benzolrings, welches an den Stickstoff gebunden ist, befindet ;
($d_2$) oder eine Verbindung, umfassend
— ein Gemisch eines Monomeren der Formel

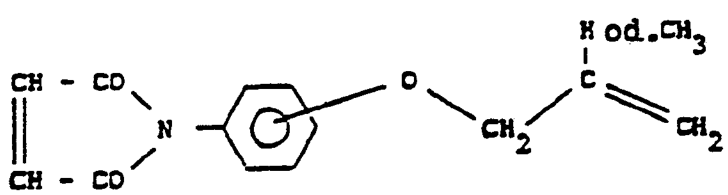

(IV)

worin sich der Allyloxy- oder Methallyloxyrest in ortho-, meta- oder para-Stellung in Bezug auf das an das Stickstoffatom gebundene Kohlenstoffatome des Benzolrings befindet,

— mit zumindest einem monosubstituierten Derivat der Formel

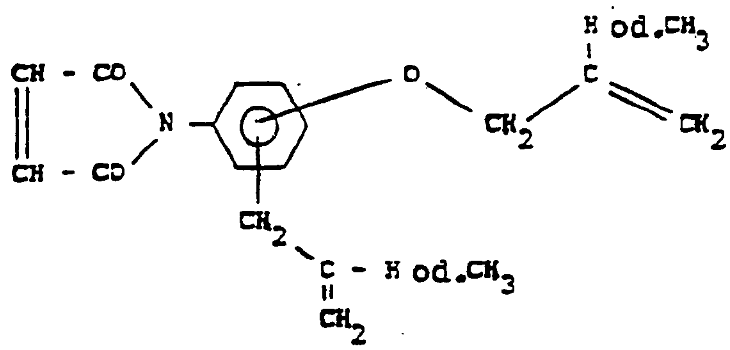

(V)

und gegebenenfalls einem oder mehreren disubstituierten Derivaten der Formel

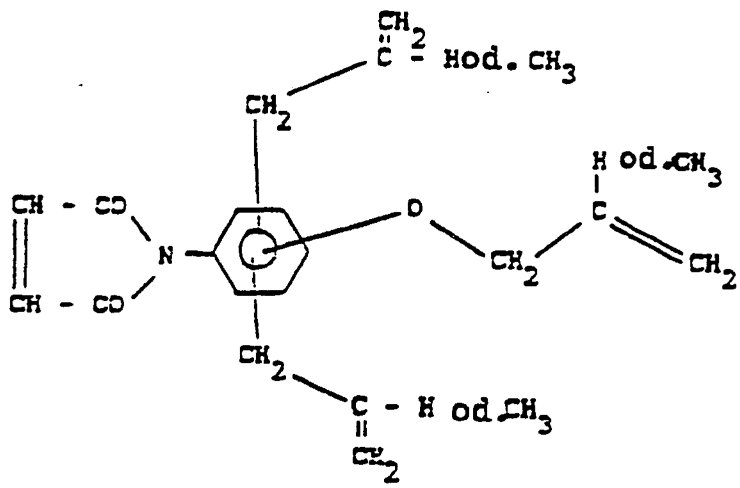

(VI)

($d_3$) ein oder mehrere substituierte Heterocyclen, die eine oder mehrere Kohlenstoff-Kohlenstoff-Doppelbindungen enthalten.

5. Verfahren gemäß einem der Ansprüche 1 bis 4, dadurch gekennzeichnet, daß der Katalysator (e), wenn man hiervon einen verwendet, entweder ($e_1$) ein radikalischer Polymerisationsinitiator oder ($e_2$) eine Imidazolverbindung der Formel

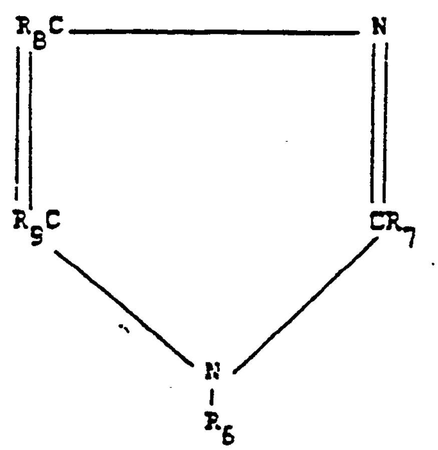

(VII)

ist, worin $R_6$, $R_7$, $R_8$ und $R_9$, die gleich oder verschieden sind, jeweils bedeuten : ein Wasserstoffatom, einen

Alkyl- oder Alkoxyrest mit 1 bis 20 Kohlenstoffatomen, Vinyl, Phenyl, Nitro, wobei $R_8$ mit $R_9$ und den Kohlenstoffatomen, an die diese Reste gebunden sind, einen einzigen Ring, wie z.B. einen Benzolring, bilden können, und wobei $R_8$ auch eine an einen zweiten Imidazolring gebundene Carbonylgruppe darstellen kann.

6. Verfahren gemäß einem der Ansprüche 1 bis 5, dadurch gekennzeichnet, daß man die Mengen der Reaktanten (a) und (b) derart wählt, daß man in Gewicht, bezogen auf das Gesamtgewicht dieser Bestandteile, erhält :

— 50 bis 98% und vorzugsweise 90 bis 95% an Bismaleimid(en) (a) der Formel (I),
— 2 bis 50% und vorzugsweise 5 bis 30% Siloxandiamin (b) der Formel (II).

7. Verfahren gemäß einem der Ansprüche 1 bis 6, dadurch gekennzeichnet, daß die Menge des fakultativen Siloxan-bismaleimids (c) der Formel (III), wenn man hiervon eines verwendet, weniger als 40% und vorzugsweise 5 bis 30% des Gesamtgewichts der Reaktanten (a) + (b) beträgt.

8. Verfahren gemäß einem der Ansprüche 1 bis 7, dadurch gekennzeichnet, daß die Menge des fakultativen Reagens (d), wenn man hiervon eines verwendet, weniger als 60% und vorzugsweise 5 bis 50% des Gesamtgewichts der Reaktanten (a) + (b) beträgt.

9. Verfahren gemäß einem der Ansprüche 1 bis 8, dadurch gekennzeichnet, daß der fakultative Katalysator (e), wenn man hiervon einen verwendet, mit einem Gehalt verwendet wird, der im Bereich von 0,01 bis 1% und vorzugsweise 0,05 bis 0,5 Gew.%, bezogen auf die Gesamtheit der Reaktanten (a) + (b) + gegebenenfalls (c) und/oder (d), liegt.

10. Verfahren gemäß einem der Ansprüche 1 bis 9, dadurch gekennzeichnet, daß, wenn man in der Masse arbeitet, man verwendet :

— als Siloxandiamine (b) der Formel (II),
— und gegebenenfalls als Siloxan-bismaleimid (c) der Formel (III)

Verbindungen, in denen das Verhältnis

$$\frac{\text{Anzahl der Si-phenyl(gegebenenfalls substituiert)-Bindungen}}{\text{Anzahl der Si-alkyl-Bindungen}}$$

zumindest 0,25 beträgt.

11. Verwendung der nach einem der Ansprüche 1 bis 10 hergestellten Polymeren zur Herstellung von Formgegenständen, Überzügen, Artikeln mit zellularer Struktur und zusammengesetzten, verstärkten und imprägnierten Materialien.

## Claims

### Claims for the following Contracting States : AT, BE, CH, DE, SE, FR, GB, IT, LI, LU, NL

1. Polymers containing imide groups, characterized in that they comprise the product of reaction, at a temperature ranging from 50° to 300°C, between ;

(a) an N,N'-bis(maleimide) or a combination of several bis(maleimides) of formula :

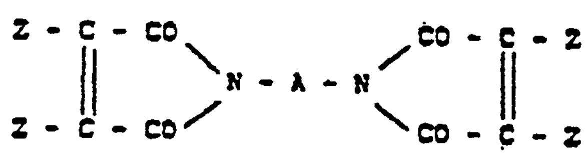

(I)

in which :

the symbols Z, which may be identical or different, each denote H, $CH_3$ or Cl ;

the symbol A denotes a divalent radical chosen from the group consisting of the following radicals ; cyclohexylenes ; phenylenes, 4-methyl-1,3-phenylene ; 2-methyl-1,3-phenylene ; 5-methyl-1,3-phenylene ; 2,5-diethyl-3-methyl-1,4-phenylene ; and the radicals of formula ;

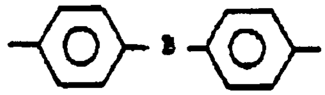

in which B denotes a single valency bond or a group :

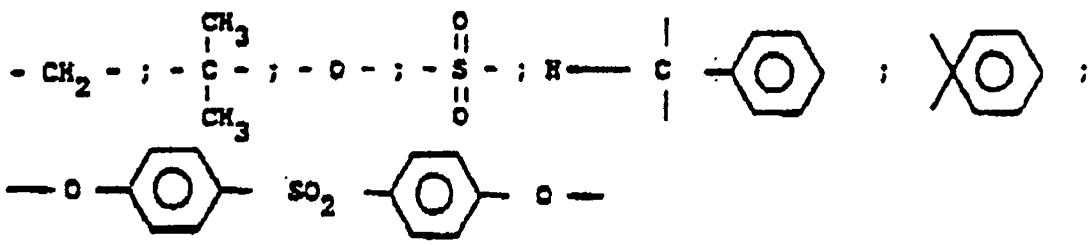

(b) a diamine containing a diorganopolysiloxane group corresponding essentially to the following formula:

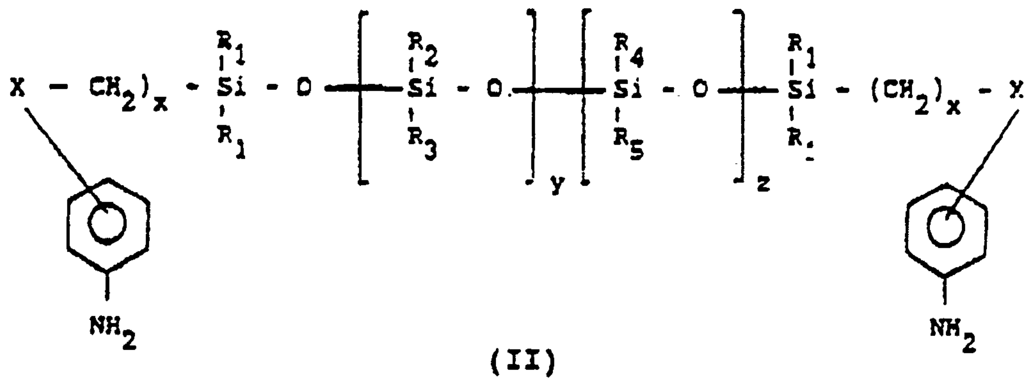

(II)

in which :

X, which is in the ortho, meta or para position with respect to the carbon atom of the benzene ring linked to the nitrogen, denotes one of the following atoms or groups :

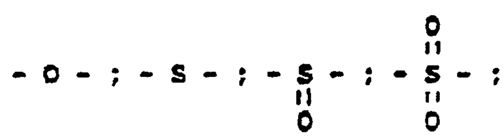

$R_1$, $R_2$, $R_3$, $R_4$ and $R_5$, which may be identical or different, each denote a monovalent hydrocarbon radical chosen from : linear or branched alkyl radicals having from 1 to 12 carbon atoms, it being possible for these radicals to be substituted with one or more chlorine, bromine or fluorine atoms or with a —CN group ; a phenyl radical optionally substituted with one or more alkyl and/or alkoxy radicals having from 1 to 4 carbon atoms or with one or more chlorine atoms ;

the symbol x is an integer falling within the range from 2 to 8 ;

the symbols y and z denote numbers, which may be identical or different, integral or fractional, whose sum falls within the range from 0 to 100 ;

(c) optionally, an N,N'-bis(maleimide) containing a diorganopolysiloxane group corresponding essentially to the general formula :

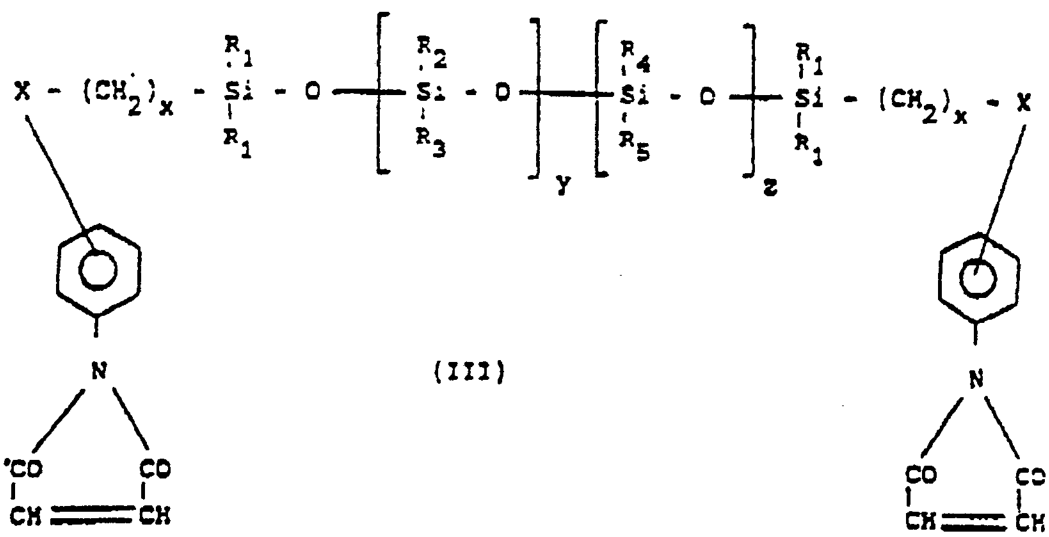

(III)

in which X, $R_1$, $R_2$, $R_3$, $R_4$, $R_5$, x, y and z have the meanings given above for the formula (II) ;

(d) optionally, one or more monomers other than a bis(maleimide) of formula (I) or of formula (III) and containing one or more polymerizable carbon-carbon double bonds ; and

(e) optionally, a catalyst.

2. Polymers according to claim 1, characterized in that the optional reactant (d), when one is used, consists of the following species :

($d_1$) either one or more monomers of formula :

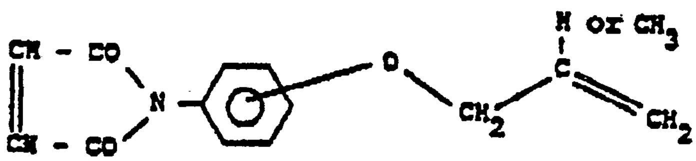

(IV)

in which the allyloxy or methallyloxy radical is in the ortho, meta or para position with respect to the carbon atom of the benzene ring linked to the nitrogen ;

($d_2$) or a compound comprising ;

— a mixture of a monomer of formula :

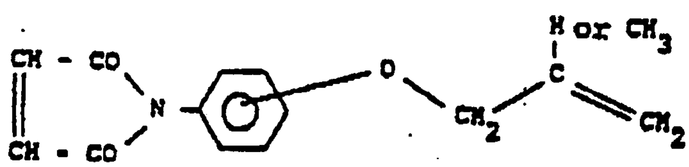

(IV)

in which the allyloxy or methallyloxy radical is in the ortho, meta or para position with respect to the carbon atom of the benzene ring linked to the nitrogen ;

— with :

• at least one monosubstituted derivative of formula :

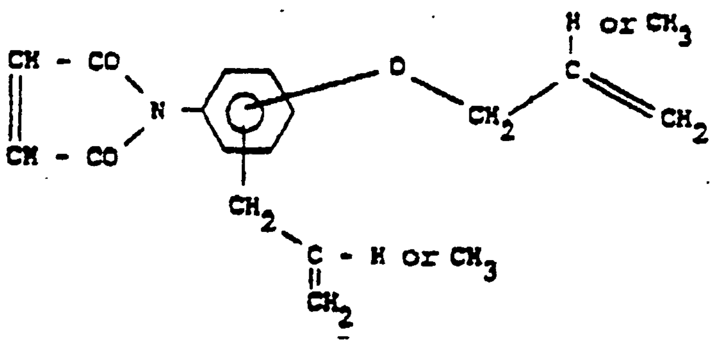

(V)

• and optionally one or more disubstituted derivatives of formula :

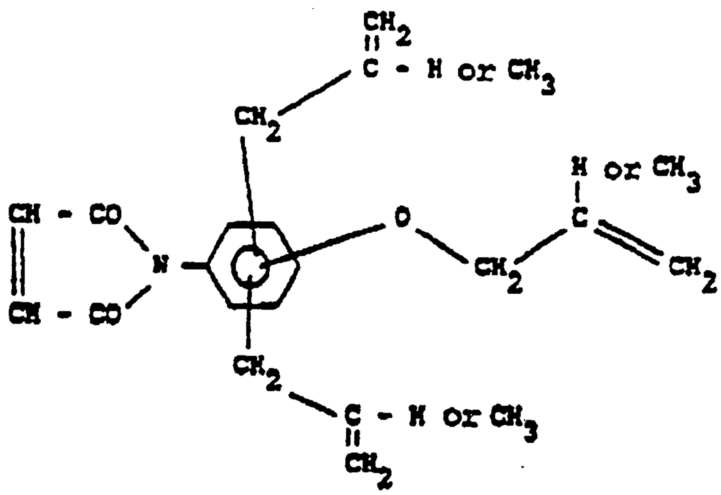

(VI)

($d_3$) or one or more substituted heterocyclic compounds containing one or more carbon-carbon double bonds.

3. Polymers according to either of Claims 1 and 2, characterizcd in that the catalyst (e) when one is used, to either ($e_1$) a free-radical polymerization initiator, or ($e_2$) an imidazole compound of formula :

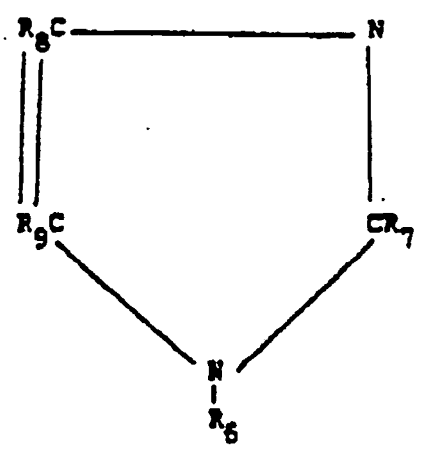

(VII)

in which $R_6$, $R_7$, $R_8$ and $R_9$, which may be identical or different, each denote a hydrogen atom, an alkyl or alkoxy radical having from 1 to 20 carbon atoms, or a vinyl, phenyl or nitro radical, it being possible for $R_8$ to form with $R_9$ and the carbon atoms to which these radicals are bound a single ring such as, for example, a benzene ring, it also being possible for $R_8$, to denote a carbonyl group bound to a second imidazole ring.

4. Polymers according to any one of claims 1 to 3, characterized in that the quantities of reactants (a) and (b) are chosen so as to have, by weight with respect to the total weight of these constituents :

from 50 to 98%, and preferably from 90 to 95%, of bis(maleimide)(s) (a) of formula (I), and

from 2 to 50%, and preferably from 5 to 30%, of siloxane-diamine (b) of formula (II).

5. Polymers according to any one of claims 1 to 4, characterized in that the quantity of the optional bis-(maleimide)-siloxane (c) of formula (III), when one is used, represents less than 40%, and preferably from 5% to 30%, of the total weight of the reactants (a) + (b).

6. Polymers according to any one of claims 1 to 5, characterized in that the quantity of the optional reactant (d), when one is used, represents less than 60%, and preferably from 5% to 50%, of the total weight of the reactants (a) + (b).

7. Polymers according to any one of claims 1 to 6, characterized in that the optional catalyst (e), when one is used, is employed at a level falling within the range from 0.01 to 1%, and preferably from 0.05 to 0.5%, by weight with respect to the combination of the reactants (a) + (b) + optionally, (c) and/or (d).

8. Polymers according to any one of claims 1 to 7, characterized in that they are in the form of cured polymers which are insoluble in the usual solvents and do not show significant softening below the temperature at which they begin to decompose.

9. Polymers according to any one of claims 1 to 7, characterized in that they take the form of thermosetting prepolymers (P) which are soluble in polar organic solvents and possess a softening point at a temperature below 200°C.

10. Process for preparing cured polymers according to claims 1 to 8, characterized in that the mixture of the reactants is heated directly to a temperature of between 50° and 300°C, working in bulk or in an organic diluent.

11. Preparation process according to claim 10, characterized in that it consists in heating the mixture of the reactants to between 50 and 180°C to form, in a first stage, a prepolymer (P), and then inducing the curing of the prepolymer (P) by heating to a temperature of between 150°C and 250°C.

12. Process for preparing thermosetting polymers (P) according to claims 1 to 7 and 9, characterized in that the mixture of the reactants is heated directly to a temperature of between 50°C and 180°C, working in bulk or in an organic diluent.

13. Preparation process according to any one of claims 10 to 12, characterized in that, when the reaction is performed in bulk, compounds in which the ratio :

$$\frac{\text{number of Si-phenyl (optionally substituted) bonds}}{\text{number of Si-alkyl bonds}}$$

is equal to at least 0.25 are used :

as siloxane-diamines (b) of formula (II),

and optionally as bis(maleimide)-siloxanes (c) of formula (III).

14. Application of the prepolymers according to any one of claims 1 to 9 to the manufacture of moulded articles, coatings, articles having a cellular structure and reinforced and impregnated composite materials.

**Claim for the following Contracting State : ES**

1. Process for preparing polymers containing imide groups that take the form of cured polymers which are insoluble in the usual solvents and do not show significant softening below the temperature at which they begin to decompose, characterized in that a mixture of the following reactants is heated directly to a temperature ranging from 50°C to 300°C :

(a) an N,N'-bis(maleimide) or a combination of several bis(malemides) of formula :

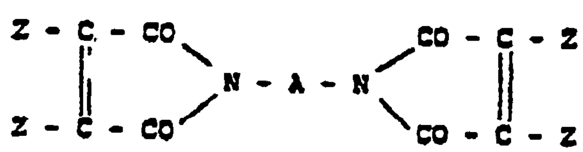

(I)

in which ;

the symbols Z, which may be identical or different, each denote H, $CH_3$ or Cl ;

the symbol A denotes a divalent radical chosen from the group consisting of the following radicals : cyclohexylenes ; phenylenes, 4-methyl-1,3-phenylene ; 2-methyl-1,3-phenylene ; 5-methyl-1,3-phenylene ; 2,5-diethyl-3-methyl-1,4-phenylene ; and the radicals of formula :

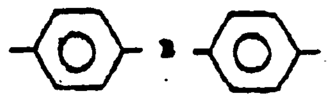

in which B denotes a single valency bond or a group :

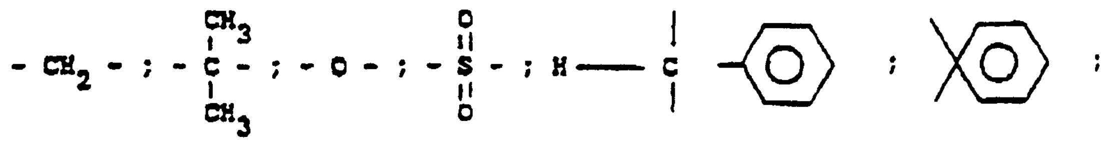

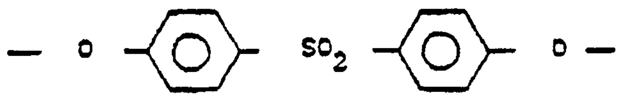

(b) a diamine containing a diorganopolysiloxane group corresponding essentially to the following formula:

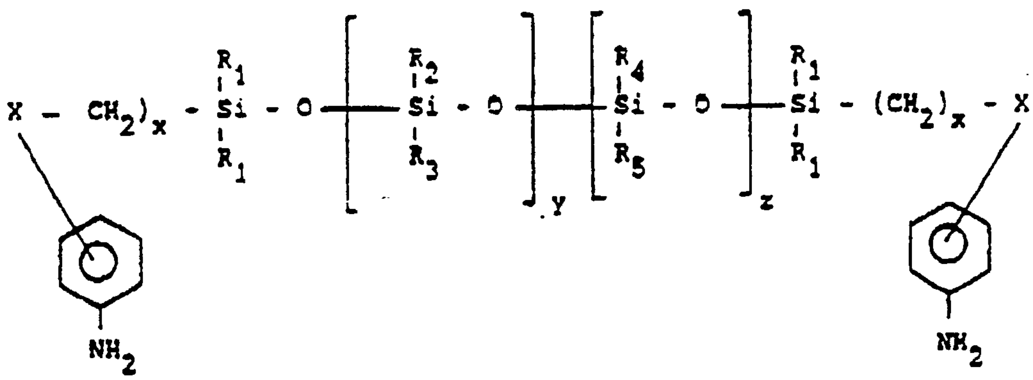

(II)

in which :

X, which is in the ortho, meta or para position with respect to the carbon atom of the benzene ring linked to the nitrogen, denotes one of the following atoms or groups :

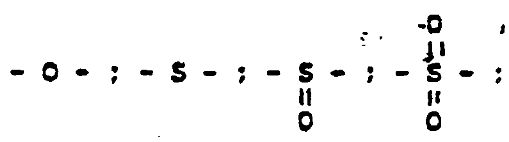

$R_1$, $R_2$, $R_3$, $R_4$ and $R_5$, which may be identical or different, each denote a monovalent hydrocarbon radical chosen from : linear or branched alkyl radicals having from 1 to 12 carbon atoms, it being possible for these radicals to be substituted with one or more chlorine, bromine or fluorine atoms or with a —CN group ; a phenyl radical optionally substituted with one or more alkyl and/or alkoxy radicals having from 1 to 4 carbon atoms or with one or more chlorine atoms ;

the symbol x is an integer falling within the range from 2 to 8 ;

the symbols y and z denote numbers, which may be identical or different, integral or fractional, whose sum falls within the range from 0 to 100 ;

(c) optionally, an N,N'-bis(maleimide) containing a diorganopolysiloxane group corresponding essentially to the general formula :

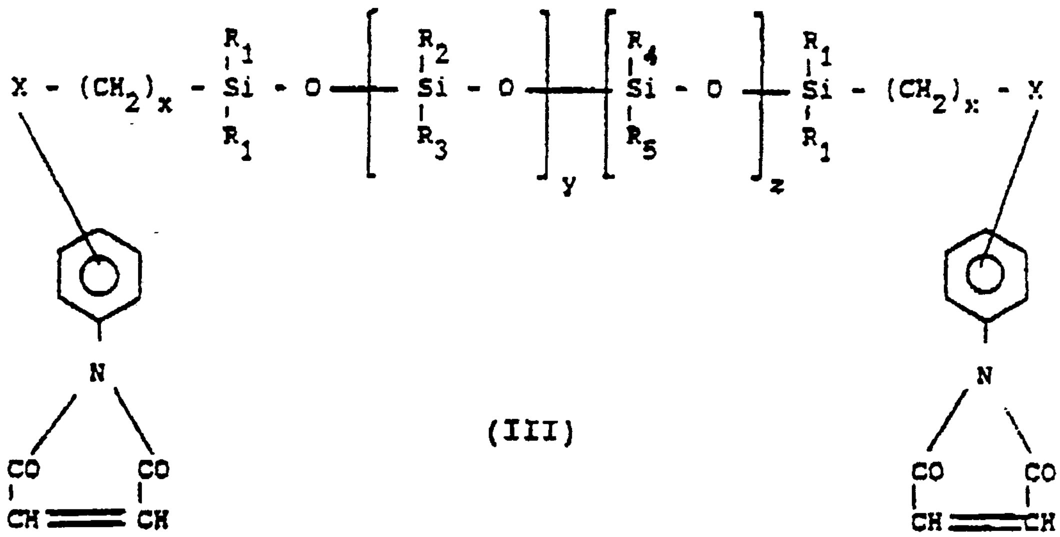

(III)

in which X, $R_1$, $R_2$, $R_3$, $R_4$, $R_5$, x, y and z have the meanings given above for the formula (II) ;
(d) optionally, one or more monomers other than a bis(maleimide) of formula (I) or of formula (III) and containing one or more polymerizable carbon-carbon double bonds ; and
(e) optionally, a catalyst,
this process being performed by working in bulk or in an organic diluent.

2. Process for preparing polymers containing imide groups that take the form of thermosetting prepolymers (P) which are soluble in polar organic solvents and possess a softening point at a temperature below 200°C, characterised in that the mixture of the reactants (a), (b), optionally (c), optionally (d) and optionally (e) that are defined above in claim 1 is heated directly to a temperature of between 50°C and 180°C, working in bulk or in an organic diluent.

3. Process according to claim 1, characterized in that it consists in heating the mixture of the reactants to between 50°C and 180°C to form, in a first stage, a prepolymer (P), and then inducing the curing of the prepolymer (P) by heating to a temperature of between 150°C and 250°C.

4. Process according to any one of claims 1 to 3, characterized in that the optional reactant (d), when one is used, consists of the following species :
($d_1$) either one or more monomers of formula :

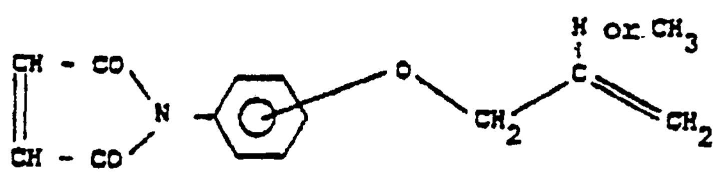

(IV)

in which the allyloxy or methallyloxy radical is in the ortho, meta or para position with respect to the carbon atom of the benzene ring linked to the nitrogen ;
($d_2$) or a compound comprising :
— a mixture of a monomer of formula :

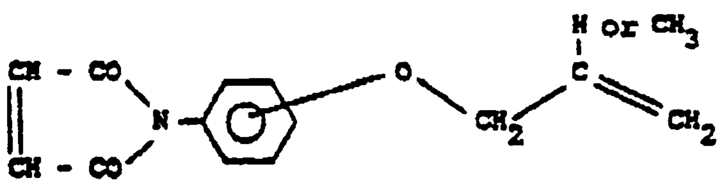

(IV)

in which the allyloxy or methallyloxy radical is in the ortho, meta or para position with respect to the carbon atom of the benzene ring linked to the nitrogen ;
— with :

• at least one monosubstituted derivative of formula :

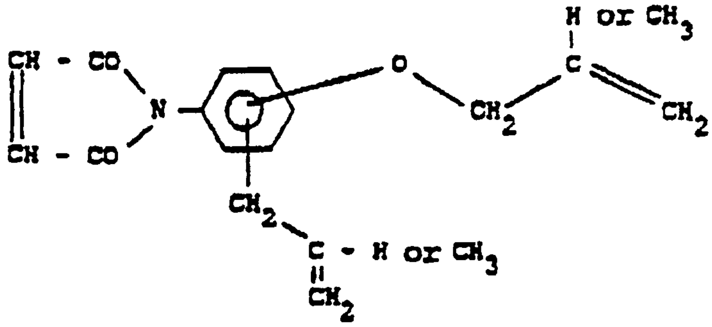

(V)

• and optionally one or more disubstituted derivatives of formula :

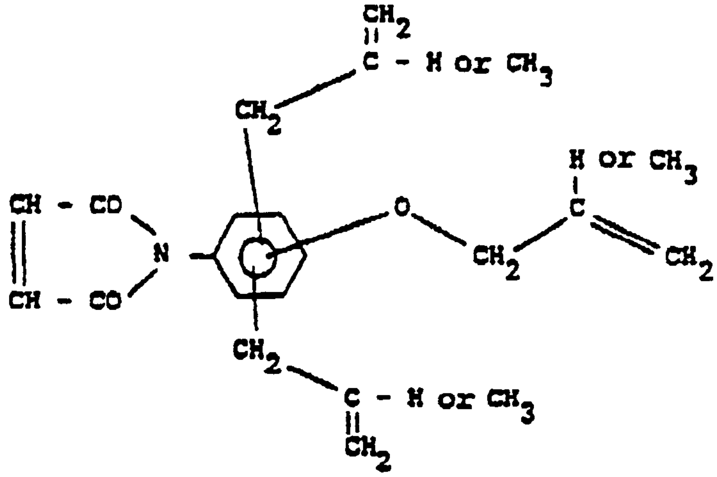

(VI)

($d_3$) or one or more substituted heterocyclic compounds containing one or more carbon-carbon double bonds.

5. Process according to any one of claims 1 to 4, characterized in that the catalyst (e), when one is used, is either ($e_1$) a free-radical polymerization initiator, or ($e_2$) an imidazole compound of formula :

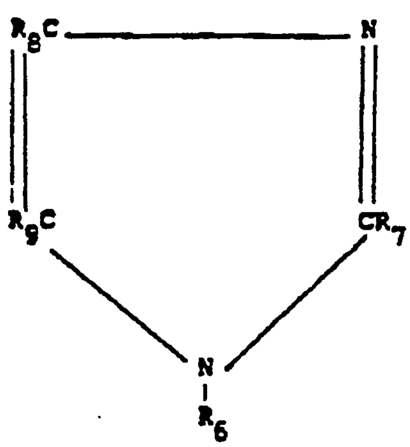

(VII)

in which $R_6$, $R_7$, $R_8$ and $R_9$, which may be identical or different, each denote a hydrogen atom, an alkyl or alkoxy radical having from 1 to 20 carbon atoms, or a vinyl, phenyl or nitro radical, it being possible for $R_8$ to form with $R_9$ and the carbon atoms to which these radicals are bound a single ring such as, for example, a benzene ring, it also being possible for $R_6$ to denote a carbonyl group bound to a second imidazole ring.

6. Process according to any one of claims 1 to 5, characterized in that the quantities of reactants (a) and

(b) are chosen so as to have, by weight with respect to the total weight of these constituents :
from 50 to 98%, and preferably from 90 to 95%, of the bis(maleimide)(s) (a) of formula (I), and
from 2 to 50%, and preferably from 5 to 30%, of siloxanediamine (b) of formula (II).

7. Polymers according to any one of claims 1 to 6, characterized in that the quantity of the optional bis-(maleimide)-siloxane (c) of formula (III), when one is used, represents less than 40%, and preferably from 5% to 30%, of the total weight of the reactants (a) + (b).

8. Process according to any one of claims 1 to 7, characterized in that the quantity of the optional reactant (d), when one is used, represents less than 60%, and preferably from 5% to 50%, of the total weight of the reactants (a) + (b).

9. Process according to any one of claims 1 to 8, characterized in that the optional catalyst (e), when one is used, is employed at a level falling within the range from 0.01 to 1%, and preferably from 0.05 to 0.5%, by weight with respect to the combination of the reactants (a) + (b) + optionally, (c) and/or (d).

10. Process according to any one of claims 1 to 9, characterized in that, when the reaction is performed in bulk, compounds in which the ratio :

$$\frac{\text{number of Si-phenyl (optionally substituted) bonds}}{\text{number of Si-alkyl bonds}}$$ is equal to at least 0.25 are used :
as siloxane-diamines (b) of formula (II),
and optionally as bis(maleimide)-siloxanes (c) of formula (III).

11. Application of the prepolymers according to any one of claims 1 to 10 to the manufacture of moulded articles, coatings, articles having a cellular structure and reinforced and impregnated composite materials.